(19) Europäisches Patentamt / European Patent Office / Office européen des brevets

(11) **EP 4 683 256 A1**

(12) **EUROPEAN PATENT APPLICATION**
published in accordance with Art. 153(4) EPC

(43) Date of publication:
**21.01.2026 Bulletin 2026/04**

(21) Application number: **24795894.5**

(22) Date of filing: **15.04.2024**

(51) International Patent Classification (IPC):
**H04L 1/08** (2006.01)     **H04L 67/12** (2022.01)

(52) Cooperative Patent Classification (CPC):
**H04L 1/08; H04L 67/12; H04L 67/125; H04Q 9/00**

(86) International application number:
**PCT/CN2024/087835**

(87) International publication number:
**WO 2024/222513 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 CN 202310484524**

(71) Applicant: **Huawei Technologies Co., Ltd.**
**Shenzhen, Guangdong 518129 (CN)**

(72) Inventors:
• **GE, Shibin**
  **Shenzhen, Guangdong 518129 (CN)**
• **WANG, Mingzhe**
  **Shenzhen, Guangdong 518129 (CN)**
• **LIN, Yingpei**
  **Shenzhen, Guangdong 518129 (CN)**
• **LU, Lei**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **COMMUNICATION METHOD AND COMMUNICATION APPARATUS**

(57)     This application discloses a communication method and a communication apparatus, and is applicable to the fields of industrial control and artificial intelligence technologies. The method includes: A first apparatus receives first information, where the first information indicates that a first data packet arrives or indicates partial content included in a first data packet. The first apparatus restores the first data packet based on the first information, and executes a control instruction included in the first data packet, where the control instruction is used to control the first apparatus. For the first data packet, the first information may be used for indication, and transmission of all content included in the first data packet does not need to be performed. According to the method, resource overheads for transmission of the first data packet can be reduced.

FIG. 5

**Description**

CROSS-REFERENCE TO RELATED APPLICATIONS

This application claims priority to Chinese Patent Application No. 202310484524.1, filed with the China National Intellectual Property Administration on April 28, 2023 and entitled "COMMUNICATION METHOD AND COMMUNICATION APPARATUS", which is incorporated herein by reference in its entirety.

TECHNICAL FIELD

This application relates to the field of industrial control technologies, and in particular, to a communication method and a communication apparatus.

BACKGROUND

In an industrial control system, an execution end responds to a control instruction of a control end, and controls a related element to perform a related action. To avoid impact of a harsh environment of an industrial field, and uniformly manage and maintain, in a flexible and convenient manner, industrial field networks distributed in different areas, information between the control end and the execution end may be forwarded via a communication system.

Generally, the control end periodically sends a data packet carrying a control command, and the communication system forwards the received data packet to the execution end. Because the communication system and the industrial control system are independent of each other, for the communication system, data packets are equal. Therefore, the communication system performs transmission of data packets in the industrial control system in a same transmission manner.

However, in data packets sent by the control end, information included in a data packet sent later is different from that included in a data packet sent earlier. For example, most of content included in a data packet sent later is the same as that included in a data packet sent earlier, and only a small amount of content (for example, sequence numbers in the data packets) is different. For another example, a data packet sent later includes more incremental information (for example, a new control instruction) than a data packet sent earlier. For ease of distinguishing, a data packet including a small amount of incremental information is referred to as a "heartbeat data packet", and a data packet including a large amount of incremental information is referred to as an "incremental data packet". If the communication system performs transmission of received data packets in a same transmission manner, transmission of same content is repeatedly performed a plurality of times, causing a waste of air interface resources.

SUMMARY

This application provides a communication method and a communication apparatus, to reduce air interface resource overheads, and reduce processing complexity and processing latency of the communication apparatus.

To achieve the foregoing objectives, the following technical solutions are used in embodiments of this application.

According to a first aspect, an embodiment of this application provides a first communication method. The first communication method may be performed by a first apparatus. The first apparatus may be a communication device or a communication apparatus that can support a communication device in implementing a function required by the method, for example, a chip system. The first apparatus may be a device used to forward a data packet in an industrial control system in a communication system. An example in which the communication system includes a network device and a terminal device is used. The first apparatus may be the terminal device, or a unit, a functional module, or the like in the terminal device. For example, the first apparatus may be a chip disposed in the terminal device, or the first apparatus is another component configured to implement a function of the terminal device.

The communication method includes: The first apparatus receives first information, where the first information indicates that a first data packet arrives or indicates partial content included in the first data packet. The first apparatus restores the first data packet based on the first information, and executes a control instruction included in the first data packet, where the control instruction is used to control the first apparatus.

In the method, the first data packet may be a heartbeat data packet. For the first data packet, the first information may indicate that the first data packet arrives or indicate the partial content included in the first data packet. Although the first apparatus receives the first information, the first apparatus may restore an original first data packet based on the first information, and determine a control instruction to be executed. Because transmission of a complete first data packet does not need to be performed, according to the method, resource overheads for transmission of the first data packet can be reduced.

In a possible implementation, the first information has a plurality of implementation forms, including but not limited to the following several implementation forms.

In a first implementation form, the first information is a first sequence, and the first sequence indicates that the first data packet arrives. The first sequence may be a specific/fixed sequence. In the method, the specific/fixed sequence indicates whether the first data packet arrives. The first apparatus determines, by detecting whether a received sequence is a specific/fixed sequence, whether the first data packet arrives. In addition, in comparison with a second data packet, fewer parameters need to be configured for the first sequence, so that more resource overheads can be saved.

Optionally, the first sequence is determined by a configured or predefined parameter, where the first sequence is a (Zadoff-Chu, ZC) sequence, and the parameter includes one or more of the following: a length of the sequence, a root sequence number of the sequence, a group number of a sequence group to which the sequence belongs, or a change sequence based on a root sequence; or the first sequence is a pseudo-noise (Pseudo-Noise, PN) sequence, and the parameter includes an initial value of the PN sequence, or a variable and/or a constant for determining an initial value of the PN sequence.

In a second implementation form, the first information is a second sequence, and one or more parameters of the second sequence indicate the partial content included in the first data packet. It may be understood that there are a plurality of parameters for generating a sequence, and sequences generated by using different parameter combinations are also different. In this solution, the second sequence may carry the partial content included in the first data packet, for example, a sequence number of the first data packet. This helps the first apparatus restore all content included in the first data packet.

Optionally, the second sequence is determined by a configured or predefined parameter, where the second sequence is a ZC sequence, and the parameter includes one or more of the following: a length of the sequence, a root sequence number of the sequence, a group number of a sequence group to which the sequence belongs, or a change sequence based on a root sequence; or the second sequence is a PN sequence, and the parameter includes an initial value of the PN sequence, or a variable and/or a constant for determining an initial value of the PN sequence.

In a third implementation form, the first information is a control channel in a first format, where the control channel in the first format indicates the partial content included in the first data packet, a first sequence of the control channel in the first format indicates the partial content included in the first data packet, or one or more parameters of a first sequence of the control channel in the first format indicate the partial content included in the first data packet.

For example, the first information is a physical downlink control channel (physical downlink control channel, PDCCH) in the first format. Similar to a case in which the second sequence carries the partial content included in the first data packet, in this solution, a control channel in a fixed format indicates the partial content included in the first data packet, and resource overheads can also be reduced. The first format may be predefined or specified. A design idea of a physical uplink control channel (physical uplink control channel, PUCCH) format, for example, design ideas of PUCCH formats 0, 1, 3, and 4, may still be used for the PDCCH in the first format.

In a fourth implementation form, the first information is control information in a first format, where the control information in the first format indicates that the first data packet arrives, an indication field of the control information in the first format indicates that the first data packet arrives, or a first status value of an indication field of the control information in the first format indicates that the first data packet arrives.

For example, the first information is alternatively downlink control information (downlink control information, DCI) in the first format. In this solution, control information in a fixed format indicates that the first data packet arrives, and resource overheads can also be reduced. The first format may be predefined or specified.

In a possible implementation, a control channel scheduled by using the control information in the first format carries the partial content included in the first data packet. In this solution, the partial content included in the first data packet is carried by a PDCCH or a PUCCH. In this solution, the control information in the fixed format indicates the partial content included in the first data packet, and resource overheads can also be reduced.

In a fifth implementation form, the first information is a data channel, and the data channel carries the partial content included in the first data packet. In this solution, a transmission manner of a second data packet may still be used for transmission of the first data packet. A difference lies in that transmission of only the partial content in the first data packet may be performed, to reduce resource overheads.

In a possible implementation, the method further includes: The first apparatus generates the first data packet based on the first information and a second data packet. The first apparatus determines, based on the first information, that the first data packet exists, and may restore all content included in the first data packet based on a previously obtained second data packet, that is, restore an original first data packet. The first apparatus may transfer the original first data packet to an execution end. For the execution end, received data packets are processed in an undifferentiated manner, that is, the received data packets are processed in a same processing manner, thereby reducing processing complexity.

According to a second aspect, an embodiment of this application provides a second communication method. The second communication method may be performed by a second apparatus. The second apparatus may be a communication device or a communication apparatus that can support a communication device in implementing a function required by the method, for example, a chip system. The second apparatus may be a device used to forward a data packet in an industrial control system in a communication system. An example in which the communication system includes a network device and a terminal device is used. The second apparatus may be the network device, or a unit, a functional module, or the like in the network device. For example, the second apparatus may be a chip disposed in the network device, or the second apparatus is another component configured to implement a function of the network device.

The communication method includes: The second apparatus receives a first data packet, and sends first information to a first apparatus. The first data packet is associated with a second data packet, and a control instruction included in the second data packet is used to control the first apparatus. The first information indicates that the first data packet arrives or indicates partial content included in the first data packet.

In the method, the first data packet is a heartbeat data packet, and after receiving the first data packet, the second apparatus may send the first information to the first apparatus. The first information may indicate that the first data packet arrives or indicate the partial content included in the first data packet. In comparison with all content that is included in the first data packet and that is sent by the second apparatus to the first apparatus, resource overheads can be reduced.

In a possible implementation, the first information is a first sequence, and the first sequence indicates that the first data packet arrives.

In a possible implementation, the first sequence is determined by a configured or predefined parameter, where the first sequence is a ZC sequence, and the parameter includes one or more of the following: a length of the sequence, a root sequence number of the sequence, a group number of a sequence group to which the sequence belongs, or a change sequence based on a root sequence; or the first sequence is a PN sequence, and the parameter includes an initial value of the PN sequence, or a variable and/or a constant for determining an initial value of the PN sequence.

In a possible implementation, the first information is a second sequence, and one or more parameters of the second sequence indicate the partial content included in the first data packet.

In a possible implementation, the second sequence is determined by a configured or predefined parameter, where the second sequence is a ZC sequence, and the parameter includes one or more of the following: a length of the sequence, a root sequence number of the sequence, a group number of a sequence group to which the sequence belongs, or a change sequence based on a root sequence; or the second sequence is a PN sequence, and the parameter includes an initial value of the PN sequence, or a variable and/or a constant for determining an initial value of the PN sequence.

In a possible implementation, the first information is a control channel in a first format, where the control channel in the first format indicates the partial content included in the first data packet, a first sequence of the control channel in the first format indicates the partial content included in the first data packet, or one or more parameters of a first sequence of the control channel in the first format indicate the partial content included in the first data packet.

In a possible implementation, the first information is control information in a first format, where the control information in the first format indicates that the first data packet arrives, an indication field of the control information in the first format indicates that the first data packet arrives, or a first status value of an indication field of the control information in the first format indicates that the first data packet arrives.

In a possible implementation, a control channel scheduled by using the control information in the first format carries the partial content included in the first data packet.

For technical effects brought by the second aspect and the possible manners of the second aspect, refer to the descriptions of the technical effects of the first aspect and the possible manners of the first aspect.

According to a third aspect, an embodiment of this application provides a third communication method. The third communication method may be performed by a first apparatus. The first apparatus may be a communication device or a communication apparatus that can support the communication device in implementing a function required by the method, for example, a chip system. The first apparatus may be a device used to forward a data packet in an industrial control system in a communication system. An example in which the communication system includes a network device and a terminal device is used. The first apparatus may be the terminal device, or a unit, a functional module, or the like in the terminal device. For example, the first apparatus may be a chip disposed in the terminal device, or the first apparatus is another component configured to implement a function of the terminal device.

The communication method includes: The first apparatus receives first information in a target transmission manner, where the first information indicates that a first data packet arrives or indicates partial content in the first data packet. The first apparatus restores the first data packet based on the first information, and executes a control instruction in the first data packet, where the control instruction is used to control the first apparatus. The target transmission manner belongs to at least two transmission manners, and the at least two transmission manners are a first transmission manner and a second transmission manner. The first transmission manner is transmission by using one or more of a control channel, a sequence, or a pilot, and the second transmission manner is transmission through a data channel. The target transmission manner is the first transmission manner.

In the method, different types of data packets may use different transmission manners. For example, the first data packet is a heartbeat data packet, and the second data packet is an incremental data packet. The first data packet may be sent in the first transmission manner, and a second data packet may be sent in the second transmission manner. Because transmission of the first information is performed in the first transmission manner, in comparison with transmission of all content in the first data packet, resource overheads for transmission of the first data packet can be reduced.

In a possible implementation, the first information is a first sequence, and the first sequence indicates that the first data packet arrives.

In a possible implementation, the first sequence is determined by a configured or predefined parameter, where the first sequence is a ZC sequence, and the parameter includes one or more of the following: a length of the sequence, a root sequence number of the sequence, a group number of a sequence group to which the sequence belongs, or a change sequence based on a root sequence; or the first sequence is a PN sequence, and the parameter includes an initial value of the PN sequence, or a variable and/or a constant for determining an initial value of the PN sequence.

In a possible implementation, the first information is a second sequence, and one or more parameters of the second sequence indicate the partial content included in the first data packet.

In a possible implementation, the second sequence is determined by a configured or predefined parameter, where the second sequence is a ZC sequence, and the parameter includes one or more of the following: a length of the sequence, a root sequence number of the sequence, a group number of a sequence group to which the sequence belongs, or a change sequence based on a root sequence; or the second sequence is a PN sequence, and the parameter includes an initial value of the PN sequence, or a variable and/or a constant for determining an initial value of the PN sequence.

In a possible implementation, the first information is a control channel in a first format, where the control channel in the first format indicates the partial content included in the first data packet. Control channels in different formats indicate partial content included in different data packets.

In a possible implementation, the first information is control information in a first format, where the control information in the first format indicates that the first data packet arrives, an indication field of the control information in the first format indicates that the first data packet arrives, or a first status value of an indication field of the control information in the first format indicates that the first data packet arrives.

In a possible implementation, a control channel scheduled by using the control information in the first format carries the partial content included in the first data packet.

In a possible implementation, the method further includes: The first apparatus generates the first data packet based on the first information and a second data packet.

In a possible implementation, the method further includes: The first apparatus receives a configuration message, where the configuration message is used to configure X transmission opportunities, transmission manners corresponding to the X transmission opportunities include the first transmission manner and the second transmission manner, and X is an integer greater than or equal to 2.

In the method, whether a data packet is the first data packet or the second data packet may be indicated by configuring a transmission manner for a transmission opportunity. If a transmission manner on a transmission opportunity is the first transmission manner, data of which transmission is performed on the transmission opportunity is the first data packet. If a transmission manner on a transmission opportunity is the second transmission manner, data of which transmission is performed on the transmission opportunity is the second data packet. No additional signaling is needed for indication, so that signaling overheads can be reduced.

In a possible implementation, the method further includes: The first apparatus receives first indication information, where the first indication information is used to configure or activate a first transmission manner combination, and the first transmission manner combination includes transmission manners that are in one-to-one correspondence with a plurality of transmission opportunities.

In a possible implementation, the method further includes: The first apparatus receives second indication information, where the second indication information is used to configure a first group of transmission manner combinations, each transmission manner combination includes a plurality of transmission manners that are in one-to-one correspondence with a plurality of transmission opportunities, and the first group of transmission manner combinations includes a first transmission manner combination.

In a possible implementation, the method further includes: The first apparatus receives third indication information, where the third indication information is used to configure a plurality of groups of transmission manner combinations, and the plurality of groups of transmission manner combinations include a first group of transmission manner combinations.

For technical effects brought by the third aspect and the possible manners of the third aspect, refer to the descriptions of the technical effects of the first aspect and the possible manners of the first aspect.

According to a fourth aspect, an embodiment of this application provides a fourth communication method. The fourth communication method may be performed by a second apparatus. The second apparatus may be a communication device or a communication apparatus that can support a communication device in implementing a function required by the method, for example, a chip system. The second apparatus may be a device used to forward a data packet in an industrial control system in a communication system. An example in which the communication system includes a network device and a terminal device is used. The second apparatus may be the network device, or a unit, a functional module, or the like in the network device. For example, the second apparatus may be a chip disposed in the network device, or the second apparatus is another component configured to implement a function of the network device.

The communication method includes: The second apparatus receives a first data packet, and sends first information in a target transmission manner. A control instruction included in the first data packet is the same as a control instruction included in a second data packet. The first information indicates that the first data packet arrives or indicates partial content in the first data packet. The target transmission manner belongs to at least two transmission manners, and the at least two transmission manners are a first transmission manner and a second transmission manner. The first transmission manner is transmission by using one or more of a control channel, a sequence, or a pilot, and the second transmission manner is transmission through a data channel. The target transmission manner is the first transmission manner.

In a possible implementation, the first information is a first sequence, and the first sequence indicates that the first data packet arrives.

In a possible implementation, the first sequence is determined by a configured or predefined parameter, where the first sequence is a ZC sequence, and the parameter includes one or more of the following: a length of the sequence, a root sequence number of the sequence, a group number of a sequence group to which the sequence belongs, or a change sequence based on a root sequence; or the first sequence is a PN sequence, and the parameter includes an initial value of the PN sequence, or a variable and/or a constant for determining an initial value of the PN sequence.

In a possible implementation, the first information is a second sequence, and one or more parameters of the second sequence indicate the partial content included in the first data packet.

In a possible implementation, the second sequence is determined by a configured or predefined parameter, where the second sequence is a ZC sequence, and the parameter includes one or more of the following: a length of the sequence, a root sequence number of the sequence, a group number of a sequence group to which the sequence belongs, or a change sequence based on a root sequence; or the second sequence is a PN sequence, and the parameter includes an initial value of the PN sequence, or a variable and/or a constant for determining an initial value of the PN sequence.

In a possible implementation, the first information is a control channel in a first format, where the control channel in the first format indicates the partial content included in the first data packet. Control channels in different formats indicate partial content included in different data packets.

In a possible implementation, the first information is control information in a first format, where the control information in the first format indicates that the first data packet arrives, an indication field of the control information in the first format indicates that the first data packet arrives, or a first status value of an indication field of the control information in the first format indicates that the first data packet arrives.

In a possible implementation, a control channel scheduled by using the control information in the first format carries the partial content included in the first data packet.

In a possible implementation, the method further includes: The second apparatus sends a configuration message, where the configuration message is used to configure X transmission opportunities, transmission manners corresponding to the X transmission opportunities include the first transmission manner and the second transmission manner, and X is an integer greater than or equal to 2.

In a possible implementation, the method further includes: The second apparatus sends first indication information, where the first indication information is used to configure or activate a first transmission manner combination, and the first transmission manner combination includes transmission manners that are in one-to-one correspondence with a plurality of transmission opportunities.

In a possible implementation, the method further includes: The second apparatus sends second indication information, where the second indication information is used to configure a first group of transmission manner combinations, each transmission manner combination includes a plurality of transmission manners that are in one-to-one correspondence with a plurality of transmission opportunities, and the first group of transmission manner combinations includes a first transmission manner combination.

In a possible implementation, the method further includes: The second apparatus sends third indication information, where the third indication information is used to configure a plurality of groups of transmission manner combinations, and the plurality of groups of transmission manner combinations include a first group of transmission manner combinations.

In a possible implementation, the method further includes: The second apparatus determines that the first data packet is a heartbeat data packet.

For technical effects brought by the fourth aspect and the possible manners of the fourth aspect, refer to the descriptions of the technical effects of the first aspect to the third aspect and the possible manners of the first aspect to the third aspect.

The first aspect and the possible manners of the first aspect may be combined with the third aspect and the possible manners of the third aspect, and the second aspect and the possible manners of the second aspect may be combined with the fourth aspect and the possible manners of the fourth aspect.

According to a fifth aspect, an embodiment of this application provides a communication apparatus. The communication apparatus has a function of implementing behavior in the method instance in any one of the first aspect to the fourth aspect. For beneficial effect, refer to the descriptions of the first aspect or the fourth aspect. Details are not described herein again. For example, the communication apparatus may be the first apparatus or the second apparatus in any one of the first aspect to the fourth aspect. Alternatively, the communication apparatus may be an apparatus, for example, a chip or a chip system, that can support the first apparatus or the second apparatus in any one of the first aspect to the fourth aspect in implementing a function required by the method provided in any one of the first aspect to the fourth aspect.

In a possible design, the communication apparatus includes a corresponding means (means) or module configured to perform the method in any one of the first aspect to the fourth aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units. These units (modules) may perform a corresponding function in the method example according to any one of the first aspect to the fourth aspect. For details, refer to the detailed descriptions in the method example. Details are not described herein.

According to a sixth aspect, an embodiment of this application provides a communication apparatus. The communication apparatus may be the communication apparatus in the fifth aspect of the foregoing embodiments, or may be a chip or a chip system disposed in the communication apparatus in the fifth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is caused to perform the method performed by the first apparatus or the second apparatus in the foregoing method embodiments.

According to a seventh aspect, an embodiment of this application provides a chip system. The chip system includes a processor, and may further include a memory and/or a communication interface, configured to implement the method in any one of the first aspect to the fourth aspect. Optionally, the chip system further includes the memory. The memory is configured to store a computer program (which may also be referred to as code or instructions). The processor is configured to: invoke the computer program from the memory and run the computer program, to cause a device on which the chip system is installed to perform the method in any one of the first aspect and the second aspect and any one of the possible implementations of any one of the first aspect and to the fourth aspect. The chip system may include a chip, or may include a chip and another discrete component.

According to an eighth aspect, an embodiment of this application provides a communication apparatus. The communication apparatus includes an input/output interface and a logic circuit. The input/output interface is configured to input and/or output information. The logic circuit is configured to perform the method according to any one of the first aspect to the fourth aspect.

In a specific implementation process, the communication apparatus may be a chip, an input circuit may be an input pin, an output circuit may be an output pin, and the logic circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit serves as the input circuit and the output circuit at different moments. Specific implementations of the input/output interface and the logic circuit are not limited in this application.

In an implementation, when the communication apparatus is a wireless communication device, the wireless communication device may be a terminal, like a smartphone, or may be a radio access network device, like a base station. The interface circuit may be a radio frequency processing chip in the wireless communication device, and the processing circuit may be a baseband processing chip in the wireless communication device.

According to a ninth aspect, an embodiment of this application provides a communication system. The communication system includes the communication apparatus that is in the fifth aspect and that is configured to implement a function in the first aspect and the communication apparatus that is in the fifth aspect and that is configured to implement a function in the second aspect. Alternatively, the communication system includes the communication apparatus that is in the fifth aspect and that is configured to implement a function in the third aspect and the communication apparatus that is in the fifth aspect and that is configured to implement a function in the fourth aspect.

According to a tenth aspect, this application provides a computer-readable storage medium. The computer-readable storage medium stores a computer program. When the computer program is run, the method in any one of the first aspect to the fourth aspect is implemented.

According to an eleventh aspect, a computer program product is provided. The computer program product includes computer program code. When the computer program code is run, the method in any one of the first aspect to the fourth aspect is performed.

For beneficial effects of the third aspect to the eleventh aspect and the implementations of the third aspect to the eleventh aspect, refer to the descriptions of the first aspect and the second aspect, or the beneficial effects of the first aspect and the second aspect and the implementations of the first aspect and the second aspect.

BRIEF DESCRIPTION OF DRAWINGS

FIG. 1 is a schematic flowchart of industrial control according to an embodiment of this application;

FIG. 2 is a diagram of a plurality of data packets sent by a control end according to an embodiment of this application;

FIG. 3 is a diagram of an integrated structure of a communication system and a control system according to an embodiment of this application;

FIG. 4 is a diagram of transmission of a control instruction or status information by a communication system according to an embodiment of this application;

FIG. 5 is a schematic flowchart of a communication method according to an embodiment of this application;

FIG. 6 is a diagram of a configuration of a data packet transmission manner according to an embodiment of this application;

FIG. 7 is a diagram of a structure of a communication apparatus according to an embodiment of this application; and

FIG. 8 is a diagram of another structure of a communication apparatus according to an embodiment of this application.

DESCRIPTION OF EMBODIMENTS

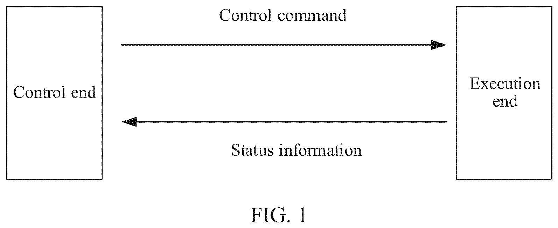

Industrial control is real-time production control of a factory production line. For example, a control end (or a controller) controls and manages terminal devices such as an intelligent instrument, a meter, and an actuator in an industrial field. The control end includes, for example, a server, a workbench, or a mechanical arm. The controller may be a programmable controller (programmable logic controller, PLC) in the control end. An execution end is generally deployed in the industrial field, and is connected to the control end through a field bus or an industrial Ethernet. The execution end is generally configured to: collect data, and control, under triggering of the control end, a related element to perform a related action, to implement the industrial control. The control end generates a control instruction based on the data from the execution end, and transfers the control instruction to the execution end, to trigger the execution end to control the related element. FIG. 1 is a schematic flowchart of industrial control. In an industrial control system, a control end sends a control instruction to an execution end, and the execution end performs a related action based on the control instruction. The execution end further feeds back status information to the control end, where the status information is used to assist the control end in generating a next control instruction.

Generally, the control end periodically sends, to the execution end, a data packet that carries the control instruction. The data packet sent by the control end to the execution end also has a specific regularity. In data packets sent by the control end, enhancement information included in a data packet sent later is different from that included in a data packet sent earlier. For example, most of content included in a data packet sent later is the same as that included in a data packet sent earlier, and only a small amount of content (for example, sequence numbers in the data packets) is different. For another example, a data packet sent later includes more incremental information (for example, a new control instruction) than a data packet sent earlier. For ease of distinguishing, a data packet including a small amount of incremental information is referred to as a "heartbeat data packet", and a data packet including a large amount of incremental information is referred to as an "incremental data packet" or an "enhanced data packet".

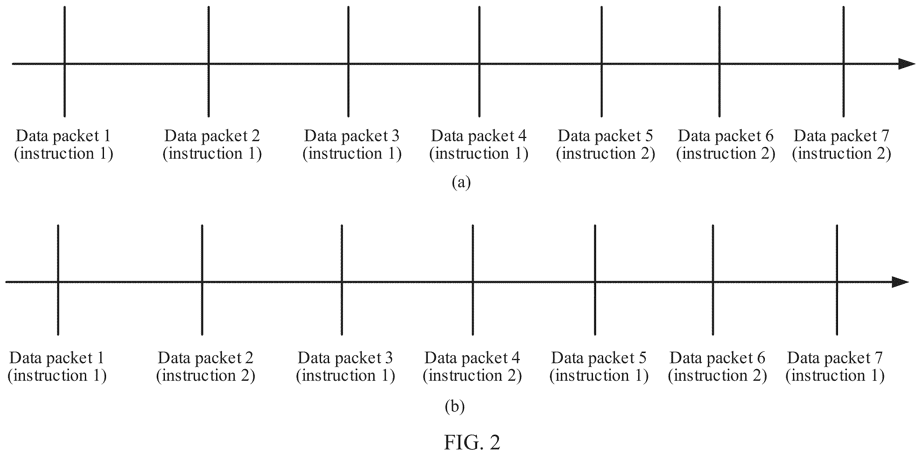

For example, FIG. 2 is a diagram of data packets sent by a control end. In FIG. 2, an example in which the control end sends seven data packets (to be specific, a data packet 1 to a data packet 7) is used. In FIG. 2, the control end may send two types of data packets: a data packet A and a data packet B. Both the data packet A and the data packet B carry a control instruction, and control instructions carried in the data packet A and the data packet B are different. As shown in (a) in FIG. 2, distribution of the seven data packets sent by the control end is AAAABBB. As shown in (b) in FIG. 2, distribution of the seven data packets sent by the control end is ABABABA.

(a) in FIG. 2 is used as an example. The data packet 1 to the data packet 4 each carry an instruction 1, and the data packet 5 to the data packet 7 each carry an instruction 2. In other words, control instructions carried in a plurality of data packets continuously sent by the control end are the same. Most of information included in the plurality of data packets carrying the same control instructions is the same. For example, most of information included in the data packet 2 to the data packet 4 is the same as that included in the data packet 1. For example, only sequence numbers may be different. For another example, most of information included in the data packet 6 and the data packet 7 is the same as that included in the data packet 5. For example, only sequence numbers may be different. In comparison with a sequence number in a data packet, a control instruction and the like may be considered as valid information. From this perspective, the data packet 2 to the data packet 4 have less additional valid information than the data packet 1. The additional valid information is also referred to as incremental information.

The data packet 1, as a 1st data packet of the instruction 1, plays a role of performing a 1st action on an execution end. Subsequently, the data packet 2 to the data packet 4 each also carry the instruction 1. It may be considered that the data packet 2 to the data packet 4 are used to maintain the execution end to perform a same action, or it may be considered that the execution end needs to be in an activated state. From this perspective, the data packet 2 to the data packet 4 may be considered as heartbeat data packets. Relatively speaking, the data packet 1 is an incremental data packet. Similarly, the data packet 5 is an incremental data packet, and the data packet 6 and the data packet 7 are heartbeat data packets. It may be understood that the incremental data packet includes more valid information than the heartbeat data packet. If a control instruction included in a heartbeat data packet is the same as a control instruction included in an incremental data packet, it may be considered that the heartbeat data packet is associated with the incremental data packet. For example, the data packet 2 to the data packet 4 are separately associated with the data packet 1, and the data packet 6 and the data packet 7 are separately associated with the data packet 5.

The incremental data packet and the heartbeat data packet may be considered as different types of data packets. To be specific, in this embodiment of this application, there are two types of data packets, for example, a first-type data packet and a second-type data packet. The heartbeat data packet belongs to the first-type data packet, and the incremental data packet belongs to the second-type data packet. Unless otherwise specified, the first-type data packet and the heartbeat data packet may be replaced with each other, and the second-type data packet and the incremental data packet may be replaced with each other.

With development of a 5th generation mobile communication technology (5th generation mobile communication technology, 5G), 5G and a future mobile communication system may support wider application scenarios, for example, ultra-reliable low-latency communication (ultra-reliable low-latency communication, URLLC). Therefore, industrial remote control is implemented by using a communication system. To be specific, a control instruction sent by a control end is transmitted to an execution end via the communication system, and correspondingly, status information sent by the execution end is transmitted to the control end via the communication system. The execution end and the control end are connected in a wireless manner. This can avoid impact of a harsh environment of an industrial field, and uniformly manage and maintain, in a flexible and convenient manner, industrial field networks distributed in different areas.

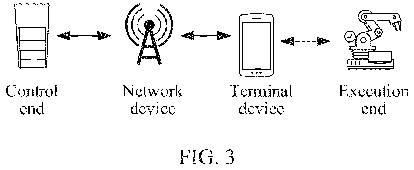

For example, FIG. 3 is a diagram of an integrated structure of a communication system and an industrial control system. A control instruction sent by a control end may be transmitted to an execution end via a network device and a terminal device. For example, the control end may transmit the control instruction to the execution end via the network device and the terminal device. Similarly, status information sent by the execution end may also be transmitted to the control end via the terminal device and the network device. In FIG. 3, an example in which the terminal device is independent of the execution end is used. In a possible implementation, the terminal device and the execution end may be designed in an integrated manner. For example, an apparatus configured to implement the terminal device may be built in the execution end.

The network device is an access device via which the terminal device accesses a mobile communication system in a wireless manner, and includes a radio access network (radio access network, RAN) device, for example, a base station. The network device may be a base station in a long term evolution (long term evolution, LTE) system, a new radio (new radio, NR) system, or a future mobile communication system, a transmission reception point (transmission reception point, TRP), an access node in a wireless fidelity (wireless fidelity, Wi-Fi) system, or the like.

In some deployments, the base station may also be a module or a unit that completes a part of functions of the base station, for example, may be a central unit (central unit, CU), or may be a distributed unit (distributed unit, DU). The CU herein completes functions of a radio resource control (radio resource control, RRC) protocol layer and a packet data convergence protocol (packet data convergence protocol, PDCP) layer of the base station, and may further complete a function of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to technical specifications related to a 3rd generation partnership project (3rd generation partnership project, 3GPP).

The base station may further include an active antenna unit (active antenna unit, AAU). The AAU implements a part of physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. In this architecture, higher layer signaling, for example, RRC layer signaling, may also be considered as being sent by the DU or sent by the DU and the AAU. It may be understood that a network may include one or more of a CU node, a DU node, or an AAU node. In addition, the CU may be classified as a network device in an access network, or the CU may be classified as a network device in a CN. This is not limited in this application.

In embodiments of this application, the network device is an apparatus configured to implement a function of the network device. For example, the apparatus may be the network device. For another example, the apparatus is an apparatus that can support the network device in implementing the function, for example, a chip system. The apparatus may be installed in the network device. In embodiments of this application, the technical solutions provided in embodiments of this application are described by using an example in which the apparatus configured to implement the function of the network device is the network device. In embodiments of this application, the chip system may include a chip, or may include a chip and another discrete component.

The terminal device is also referred to as a terminal, and includes user equipment (user equipment, UE), an access station, a UE station, a remote station, a wireless communication device, a user apparatus, a chip, or the like. The terminal device is configured to connect a person, an object, a machine, and the like, and may be widely used in various scenarios. For example, the terminal device may be a mobile phone, a tablet computer, a computer having a wireless transceiver function, a virtual reality (virtual reality, VR) terminal, an augmented reality (augmented reality, AR) terminal, a wireless terminal in industrial control, an entire vehicle, a wireless communication module in an entire vehicle, a vehicle-mounted T-box (Telematics BOX), a roadside unit (rodeside unit, RSU), or a wireless terminal in self-driving. If various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement a method in embodiments of this application.

In embodiments of this application, the terminal device is an apparatus configured to implement a function of the terminal device. For example, the apparatus may be the terminal device. For example, the apparatus may be the mobile phone, a mechanical arm, or the like. For another example, the apparatus is an apparatus that can support the terminal device in implementing the function, for example, a chip system. The apparatus may be installed in the terminal device. For example, the terminal device is a vehicle, and the apparatus may be a vehicle detector. The terminal device is the mechanical arm, and the apparatus may be a chip inside the mechanical arm. The terminal device may be the mobile phone, and the apparatus may be a chip disposed in the mobile phone and configured to control a mechanical arm. In embodiments of this application, the technical solutions provided in embodiments of this application are described by using an example in which the apparatus configured to implement the function of the terminal device is the terminal device.

In the network architecture shown in FIG. 3, the communication system and the industrial control system are independent of each other. For the communication system, data packets from the industrial control system are equal. Therefore, the communication system performs transmission of the data packets in the industrial control system in a same transmission manner.

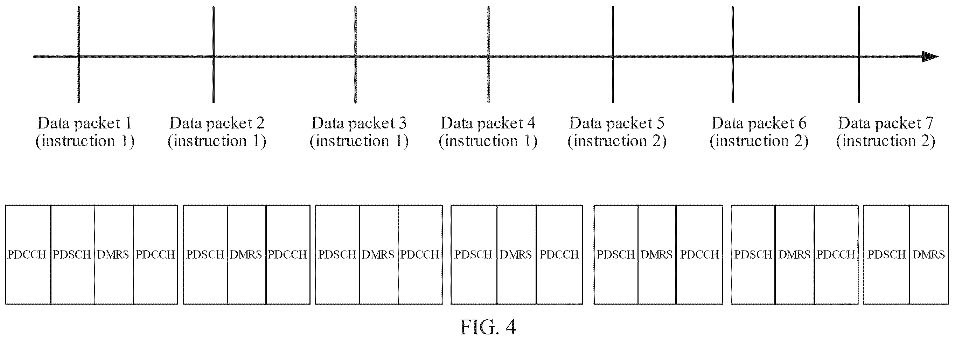

For example, FIG. 4 is a diagram of transmission of a control instruction or status information by a communication system. In FIG. 3, an example in which a control end sends the data packets shown in (a) in FIG. 2 is used. Transmission of the data packet 1 to the data packet 7 is performed through a physical uplink shared channel (physical uplink shared channel, PUSCH) or a physical downlink shared channel (physical downlink shared channel, PDSCH). Before performing transmission of the PUSCH or the PDSCH, a base station needs to schedule a physical uplink control channel (physical uplink control channel, PUCCH) or a physical downlink control channel (physical downlink control channel, PDCCH), to carry scheduling information of the PUSCH or the PDSCH. Certainly, during transmission of the control instruction or the status information, transmission of a demodulation reference signal (demodulation reference signal, DMRS) is further performed, to demodulate a received PUSCH or PDSCH by a receive end.

Most of information included in different data packets may be the same. The example in FIG. 1 is still used. Control instructions (namely, instructions 1) carried in the data packet 2 to the data packet 4 behind the data packet 1 are the same as a control instruction carried in the data packet 1, and only sequence numbers in the data packets may be different. If transmission of a heartbeat data packet and an incremental data packet is performed by using resources that have a same size, it is equivalent to that transmission of same content is repeatedly performed a plurality of times. It is clear that, this causes a waste of resources. In addition, processing complexity of different types of data packets is also different, and processing the different data packets in a same processing manner causes large processing latency.

To resolve the foregoing technical problems, technical solutions provided in embodiments of this application are provided. In embodiments of this application, for a heartbeat data packet, that the heartbeat data packet arrives may be indicated, or transmission of partial content included in the heartbeat data packet may be indicated. In comparison with transmission of all content included in the heartbeat data packet, in the technical solutions, transmission resource overheads can be saved.

As shown in FIG. 2, the control end sends a data packet according to a specific regularity, and a sending moment of an incremental data packet associated with a heartbeat data packet is earlier than a sending moment of the heartbeat data packet. A receive end first receives an incremental data packet, and then receives at least one heartbeat data packet associated with the incremental data packet. In comparison with the associated incremental data packet, the heartbeat data packet is different only in a small amount of information such as a sequence number. Therefore, the receive end may know, by using the first received incremental data packet, a control instruction included in the subsequently associated heartbeat data packet. The receive end may restore an original heartbeat data packet based on the first received incremental data packet. Even if all content included in the heartbeat data packet is not transmitted to the receive end, the receive end can still know all content included in the original heartbeat data packet.

Correspondingly, in embodiments of this application, for the heartbeat data packet, that the heartbeat data packet arrives may be indicated, or the partial content in the heartbeat data packet may be indicated. In comparison with transmission of all the content included in the heartbeat data packet, in the technical solutions, resource overheads can be saved.

To facilitate understanding of the solutions provided in embodiments of this application, before the solutions are described, related technical terms in embodiments of this application are first explained and described.

(1) A ZC sequence is a sequence used to generate a base sequence, where the base sequence is a sequence used to generate a reference signal. A ZC sequence $r_{u,v}^{(\alpha,\delta)}(n)$ whose length is $M_{ZC}$ satisfies the following formula (1).

$$r_{u,v}^{(\alpha,\delta)}(n) = e^{j\alpha n}\overline{r}_{u,v}(n), \qquad 0 \leq n \leq M_{ZC} \quad (1)$$

u represents a sequence group, v represents a root sequence in a group in sequences, and $\alpha$ and $\delta$ represent change sequences based on the root sequence. The ZC sequence whose length is $M_{ZC}$ may be determined based on parameters u, v, $\alpha$, $\delta$, and $M_{ZC}$.

One or more parameters of the ZC sequence may be (pre)configured or directly or indirectly obtained based on another (pre)configured parametric value. For example, $M_{ZC}$ is determined by an allocated time-frequency resource, u, v, $\alpha$, and $\delta$ are configured by using radio resource control (radio resource control, RRC) signaling or are directly or indirectly obtained based on other parametric values. For another example, $M_{ZC}$ is determined by an allocated time-frequency resource, u, v, and $\alpha$ are configured by using RRC signaling or are directly or indirectly obtained based on other parametric values, and a value of $\delta$ is specified in a protocol, for example, is specified to be 0. For another example, $M_{ZC}$ is determined by an allocated time-frequency resource, u and v are configured by using RRC signaling or are directly or indirectly obtained based on other parametric values, and values of $\alpha$ and $\delta$ are specified in a protocol, for example, are specified to be 0. For another example, $M_{ZC}$ is determined by an allocated time-frequency resource, u is configured by using RRC signaling or is directly or indirectly obtained based on another parametric value, and values of v, $\alpha$, and $\delta$ are specified in a protocol, for example, are specified to be 0.

(2) A PN sequence is a pseudo-random sequence, and is generally a length gold sequence. A gold sequence c(n) whose length is $M_{PN}$ satisfies the following formula (2).

$$c(n) = (x_1(n+N_C) + x_2(n+N_C)) \bmod 2$$
$$x_1(n+31) = (x_1(n+3) + x_1(n)) \bmod 2 \qquad (2)$$
$$x_2(n+31) = (x_2(n+3) + x_2(n+2) + x_2(n+1) + x_2(n)) \bmod 2$$

n=0, 1, ..., $M_{PN}$-1, $N_C$ is a constant, for example, 1,600, and mod is a modulo operator. An initial value of x1(n) is x1(0)=1, x1(n)=0, n=1, 2, ..., 30, x1(n+$N_C$) may be obtained through calculation according to x1(n+31)=(x1(n+3)+x1(n)) mod 2, and an initial value $C_{init}$ of x2(n) depends on an applied sequence and satisfies the following formula (3). x2(n+31) may be obtained according to a formula x2(n+31)=(x2(n+3)+x2(n+2)+x2(n+1)+x2(n))mod 2, to generate c(n).

$$C_{init} = \sum_{i=0}^{30} x_2(i) \times 2^i \quad (3)$$

$C_{init}$ may be predefined. For example, a protocol specifies that $C_{init}$ is a fixed value, for example, 0. Alternatively, $C_{init}$ may be (pre)configured by using signaling.

Alternatively, $C_{init}$ may be directly or indirectly obtained through calculation based on another parametric value. For example, $C_{init}$ may be obtained through calculation according to the following formula (4).

$$C_{init} = (2^{17}(N_{symb}^{slot}n_{s,f}^{u} + l + 1)(2N_{ID}^{\bar{n}_{SCID}^{\lambda}} + 1) + 2^{17}\left\lfloor \frac{\bar{\lambda}}{2} \right\rfloor + 2N_{ID}^{\bar{n}_{SCID}^{\lambda}} + \bar{n}_{SCID}^{\bar{\lambda}}) \bmod 2^{31} \quad (4)$$

For meanings of parameters in the formula (4), refer to related content in 3GPP TS38.211 (for example, 3GPP TS38.211 V16.2.0). Details are not described herein.

It should be noted that the (pre)configuration mentioned in embodiments of this application includes one or more of an RRC configuration, a downlink control information (downlink control information, DCI) indication, a MAC control element (control element, CE) signaling configuration, pre-definition, default, or the like.

(3) In embodiments of this application, "at least one" means one or more, and "a plurality of" means two or more than two. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one item (piece) of the following" or a similar expression thereof means any combination of these more than ten items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, but are not intended to limit an order, a time sequence, priorities, or importance degrees of the plurality of objects. For example, a first transmission manner and a second transmission manner are merely used to distinguish between different transmission manners, but do not indicate different priorities, different importance degrees, or the like of the two transmission manners. In embodiments of this application, "if" and "assuming that" may be interchangeable, and unless otherwise specified, "when" and "in a case in which..." may be interchangeable.

The following describes, with reference to accompanying drawings, the solutions provided in embodiments of this application. In the following descriptions, an example in which a communication method provided in embodiments of this application is applied to the network architecture shown in FIG. 3 is used. A network architecture and an application scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new application scenario, the technical solutions provided in embodiments of this application are also applicable to a similar technical problem.

The communication method provided in embodiments of this application relates to interaction between at least two communication apparatuses, and the two communication apparatuses are, for example, a first apparatus and a second apparatus. The first apparatus and the second apparatus may be apparatuses in a communication system, and are configured to forward a data packet between a control end and an execution end in industrial control information. For example, the first apparatus is a terminal apparatus, and the second apparatus is a network apparatus. Alternatively, the second apparatus is an apparatus in a communication system, the first apparatus and an execution end in industrial control information are designed in an integrated manner, and the first apparatus may communicate with the second apparatus. For example, the second apparatus is a network apparatus, the first apparatus is a terminal apparatus, and the first apparatus is built in the execution end. Further, the first apparatus may be a communication apparatus that can support the terminal apparatus in implementing a function required by the method. For example, the first apparatus may be a terminal device. Certainly, the first apparatus may alternatively be another communication apparatus, for example, a chip or a chip system. The second apparatus may be a communication apparatus that can support the network apparatus in implementing a function required by the method. For example, the second apparatus may be a network device. Certainly, the second apparatus may alternatively be another communication apparatus, for example, a chip or a chip system.

For ease of description, the following uses an example in which the method is performed by the terminal apparatus and the network apparatus, that is, an example in which the first apparatus is the terminal apparatus and the second apparatus is the network apparatus. In addition, in the following descriptions, an example in which a transmission direction of a data packet is from the controller to the second apparatus and then to the first apparatus is used. The method provided in embodiments of this application is also applicable to a transmission direction of a data packet from the first apparatus to the second apparatus and then to the controller.

The control end may send a data packet to the network apparatus. After receiving the data packet, the network apparatus sends the data packet to the terminal apparatus, and then the terminal apparatus sends the data packet to the execution end. Alternatively, when the terminal apparatus is disposed at the execution end, the terminal apparatus may control the execution end based on a control instruction carried in a received data packet. The following describes in detail how to perform transmission of a heartbeat data packet with reference to embodiments. In the following descriptions, an example in which a first data packet is the heartbeat data packet is used. A second data packet is a data packet associated with the first data packet. Alternatively, a control instruction included in a second data packet is the same as a control instruction included in the first data packet. The second data packet may be an incremental data packet associated with the first data packet, or may be a heartbeat data packet associated with the first data packet.

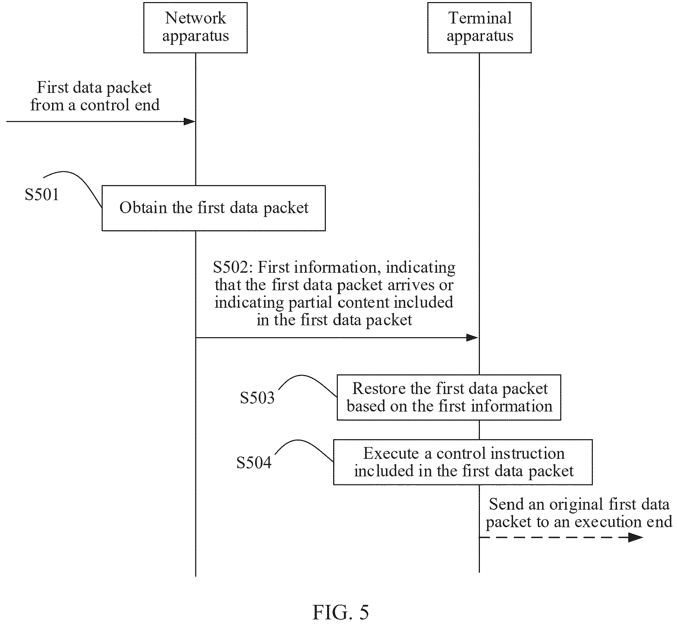

FIG. 5 is a schematic flowchart of a communication method according to an embodiment of this application. FIG. 5 describes the method from a perspective of interaction between a terminal apparatus and a network apparatus. As shown in FIG. 5, a procedure of the communication method includes the following steps.

S501: The network apparatus obtains a first data packet.

The first data packet may be sent by a control end to the network apparatus. For the network apparatus, after obtaining a data packet, the network apparatus first determines whether the data packet is a heartbeat data packet or an incremental data packet, to determine a transmission manner for transmission of the data packet. For example, after obtaining the first data packet, the network apparatus may determine that the first data packet is the heartbeat data packet, and then determine to perform transmission of the heartbeat data packet in a first transmission manner.

The network apparatus determines whether a data packet is the heartbeat data packet or the incremental data packet in a plurality of manners. For example, the plurality of manners include but are not limited to the following three manners.

(1) A data packet A is used as an example. The network apparatus may compare the data packet A with a data packet B received before the data packet A, and determine, based on a comparison result, whether the data packet A is the heartbeat data packet or the incremental packet. The data packet B may be a data packet whose receiving moment is closest to a receiving moment of the data packet A. For example, valid information included in the data packet A may be compared with valid information included in the data packet B. The valid information, for example, includes a sequence number and a control instruction in the data packet. The valid information may also be replaced with incremental information/enhancement information.

If the data packet A includes more valid information than the data packet B, the data packet A is the incremental data packet. On the contrary, if the data packet A includes less valid information than the data packet B, the data packet A is the heartbeat data packet.

Alternatively, if the data packet A includes less incremental information than the data packet B, for example, includes only a sequence number, the data packet A is the heartbeat data packet; or if the data packet A includes more incremental information than the data packet B, for example, further includes a control instruction in addition to a sequence number, the data packet A is the incremental data packet. The example shown in (a) in FIG. 2 is still used. The data packet A is the data packet 3, the data packet B is the data packet 2, and a control instruction included in the data packet 3 is the same as a control instruction included in the data packet 2. In this case, the data packet 3 includes less valid information than the data packet 2, and the data packet A is the heartbeat data packet. If the data packet A is the data packet 5, the data packet B is the data packet 4, and a control instruction included in the data packet 5 is different from a control instruction included in the data packet 4, it may be considered that the data packet 5 includes more valid information than the data packet 4, and the data packet A is the incremental data packet.

Optionally, a threshold may be set. If the increment information exceeds the threshold for the data packet A relative to the data packet B, the data packet A is the increment data packet; or if the increment information is less than the threshold for the data packet A relative to the data packet B, the data packet A is the heartbeat data packet. A specific implementation form of the threshold is not limited in this embodiment of this application. For example, the threshold may be X bits, where X is greater than or equal to 0.

(2) A data packet A is used as an example. The network apparatus may compare the data packet A with a reference data packet, and determine, based on a comparison result, whether the data packet A is the heartbeat data packet or the incremental data packet. The reference data packet may be predefined or preconfigured. For example, the reference data packet is predefined as a 1st data packet after a communication link is established. For another example, the reference data packet may be an Nth data packet sent by the control end, where N is an integer greater than or equal to 1.

If the data packet A includes more valid information than the reference data packet, the data packet A is the incremental data packet. On the contrary, if an amount of valid information included in the data packet A is less than or equal to an amount of valid information included in the reference data packet, the data packet A is the heartbeat data packet.

Alternatively, if the data packet A includes less incremental information than the reference data packet, for example, includes only a sequence number, the data packet A is the heartbeat data packet; or if the data packet A includes more incremental information than the reference data packet, for example, further includes a control instruction in addition to a sequence number, the data packet A is the incremental data packet. The example shown in (a) in FIG. 2 is still used. An example in which the reference data packet is a 1st data packet sent by the control end is used. Assuming that the data packet A is the data packet 3, and a control instruction included in the data packet 3 is the same as a control instruction included in the data packet 1, it may be considered that the data packet 3 includes less valid information than the data packet 1, and the data packet 3 is the heartbeat data packet. If the data packet A is the data packet 5, and a control instruction included in the data packet 5 is different from a control instruction included in the data packet 1, it may be considered that the data packet 5 includes more valid information than the data packet 1, and the data packet 5 is the incremental data packet.

Optionally, a threshold may be set. If the incremental information exceeds the threshold for the data packet A relative to the reference data packet, the data packet A is the incremental data packet; or if the incremental information is less than the threshold, the data packet A is the heartbeat data packet for the data packet A relative to the reference data packet. A specific implementation form of the threshold is not limited in this embodiment of this application. For example, the threshold may be Y bits, where Y is greater than or equal to 0.

(3) Another apparatus sends, to the network apparatus, indication information indicating a type of a data packet, and the network apparatus determines, based on the indication information, whether the data packet is the heartbeat data packet or the incremental data packet.

In an example, the another apparatus may be the control end. A data packet A is used as an example. In addition to sending the data packet A to the network apparatus, the control end may further send type indication information. The type indication information may indicate a type of the data packet A, or the type indication information indicates that the data packet A is the heartbeat data packet or the incremental data packet. The type indication information may be information of one bit. A value "0" of the bit indicates the heartbeat data packet, and a value "1" of the bit indicates the incremental data packet; or a value "1" of the bit indicates the heartbeat data packet, and a value "0" of the bit indicates the incremental data packet. The network apparatus may determine, based on the type indication information, whether the received data packet A is the heartbeat data packet or the incremental data packet. Optionally, the data packet A and the type indication information may be sent together, in other words, the data packet A and the type indication information are encapsulated together and sent. Alternatively, the data packet A and the type indication information may be sent independently, in other words, the data packet A and the type indication information are sent separately. A specific name of the type indication information is not limited in this embodiment of this application.

For another example, the control end may send, to the network apparatus at a time, indication information indicating types of a plurality of data packets. In other words, the type indication information may indicate the types of the plurality of data packets, for example, [increment, heartbeat, heartbeat, heartbeat, heartbeat, increment, heartbeat, heartbeat, heartbeat, increment, heartbeat, ...]. It may also be considered that the type indication information may indicate a transmission characteristic/regularity of a data packet. The transmission characteristic/regularity of the data packet may be considered as performing transmission of the data packet according to a specific rule. From this perspective, the type indication information may also indicate the transmission rule of the data packet. For example, one incremental data packet appears at an interval of X heartbeat data packets. The network apparatus receives a data packet, and may determine, based on the type indication information, whether the received data packet is the heartbeat data packet or the incremental data packet.

In another example, the another apparatus may be a core network device, for example, a user plane function (user plane function, UPF) network element. In this case, the control end may send a plurality of data packets to the core network device, and the core network device may analyze characteristic information of a plurality of received historical data packets (for example, control instructions included in the data packets), to obtain a transmission characteristic/regularity of the data packets. The core network device may send, to the network apparatus, type indication information indicating the transmission characteristic/regularity of the data packets. Optionally, the core network device may transparently transmit the transmission characteristic/regularity of the data packets to the network apparatus, to reduce processing latency of the network apparatus. The network apparatus may determine, based on the type indication information, whether a received data packet is the heartbeat data packet or the incremental data packet. A specific manner in which the core network device obtains the transmission characteristic/regularity of the data packets based on the characteristic information of the historical data packets is not limited in this embodiment of this application. For example, a machine learning manner may be used.

(4) The network apparatus may alternatively obtain a transmission characteristic/regularity of a data packet based on characteristic information of a received historical data packet, and determine, based on the transmission characteristic/regularity of the data packet, whether the received data packet is the heartbeat data packet or the incremental data packet. A specific manner in which the network apparatus obtains the transmission characteristic/regularity of the data packet based on the characteristic information of the historical data packets is not limited in this embodiment of this application. For example, a machine learning manner may be used. In addition, a regularity that is of data packets sent by the control end and that is sensed by the network apparatus, and a regularity that is of data packets sent by the control end and that is sensed by the core network device may be independent of each other.

It should be noted that a control instruction carried in a data packet to be sent by the control end may mention a key production parameter. If this part of information is sent together with service information, a leakage may be caused.

Therefore, in this embodiment of this application, this part of information and the service information may be sent independently. In other words, an independent interaction mechanism may be designed based on a requirement for this part of information and the service information, for interaction with the network apparatus. A specific implementation of the interaction mechanism is not limited in this embodiment of this application, provided that a leakage of this part of information can be reduced.

In this embodiment of this application, after obtaining the first data packet, the network apparatus may determine, in one or more of the foregoing three manners, that the first data packet is the heartbeat data packet.

S502: The network apparatus sends first information to the terminal apparatus, where the first information indicates that the first data packet arrives or indicates partial content included in the first data packet.

When determining that the first data packet is the heartbeat data packet, the network apparatus may indicate that the first data packet arrives or indicate the partial content included in the first data packet. That the first data packet arrives may be replaced with that the heartbeat data packet arrives or a data packet arrives. If the first information indicates that the data packet arrives, it may be considered by default that the heartbeat data packet arrives. The network apparatus may indicate, to the terminal apparatus by using the first information, that the first data packet arrives or transmission of the partial content included in the first data packet.

The network apparatus sends the first information in a plurality of manners. For example, the network apparatus may express the first information by using one or more of a control channel, a sequence, or a pilot. In comparison with information transmission by using a data channel, transmission by using one or more of the control channel, the sequence, or the pilot may be considered as a transmission manner, for example, referred to as the first transmission manner. A manner of information transmission by using the data channel is considered as another transmission manner, for example, referred to as a second transmission manner. That is, at least two transmission manners including the first transmission manner and the second transmission manner are mentioned in this embodiment of this application. The second transmission manner is shown in FIG. 4. Refer to the related content in FIG. 4. Details are not described herein again.

After obtaining the first data packet, the network apparatus determines to send the first information in the first transmission manner in the at least two transmission manners. Implementations of the first information are different based on different second transmission manners, and include but are not limited to the following several implementations.

(1) In the first transmission manner, transmission is performed by using the sequence, and the first information may be a specific sequence, to indicate that the first data packet arrives.

For example, the first information may be a first sequence. The network apparatus sends the first information, in other words, the network apparatus sends the first sequence. The terminal apparatus determines, by detecting whether a received sequence is the first sequence, whether an obtained data packet is the heartbeat data packet. If the sequence received by the terminal apparatus is the first sequence, the terminal apparatus determines that the obtained data packet is the heartbeat data packet. On the contrary, if the sequence received by the terminal apparatus is not the first sequence, the terminal apparatus determines that the obtained data packet is not the heartbeat data packet.

A type of the first sequence is not limited in this embodiment of this application. For example, the first sequence may be a ZC sequence, a PN sequence, or another possible sequence. Optionally, the first sequence is the PN sequence. In this case, complexity of the network apparatus can be reduced.

The first sequence may be predefined or preconfigured, or the first sequence may be determined by one or more configured or predefined parameters. The network apparatus sends the predefined or preconfigured first sequence, or before sending the first sequence, the network apparatus generates the first sequence based on one or more predefined or preconfigured parameters.

An example in which the first sequence is the ZC sequence is used. A ZC sequence may be predefined or (pre) configured, to indicate that the heartbeat data packet arrives. Alternatively, one or more of the following parameters of the ZC sequence may be predefined or (pre)configured, and the ZC sequence generated by using the one or more parameters may indicate that the heartbeat data packet arrives. The one or more parameters include, for example, a length (for example, the foregoing $M_{ZC}$) of the sequence, a root sequence number (for example, the foregoing v) of the sequence, a group number (for example, the foregoing u) of a sequence group to which the sequence belongs, or a change sequence (for example, the foregoing $\alpha$ and $\delta$) based on a root sequence. Optionally, the one or more parameters may be indirectly obtained based on another parametric value. For example, $M_{ZC}$ is determined by an allocated time-frequency resource, u, v, $\alpha$, and $\delta$ are configured by using RRC signaling or are directly or indirectly obtained based on other parametric values. For another example, $M_{ZC}$ is determined by an allocated time-frequency resource, u, v, and $\alpha$ are configured by using RRC signaling or are directly or indirectly obtained based on other parametric values, and a value of $\delta$ is specified in a protocol, for example, is specified to be 0. For another example, $M_{ZC}$ is determined by an allocated time-frequency resource, u and v are configured by using RRC signaling or are directly or indirectly obtained based on other parametric values, and values of $\alpha$ and $\delta$ are specified in a protocol, for example, are specified to be 0. For another example, $M_{ZC}$ is determined by an allocated time-frequency resource, u is configured by using RRC signaling or is directly or indirectly obtained based on another parametric value, and values of v, $\alpha$, and $\delta$ are specified in a protocol, for example, are specified to be 0.

An example in which the first sequence is the PN sequence is used. A PN sequence may be predefined or (pre) configured, to indicate that the heartbeat data packet arrives. Alternatively, one or more of the following parameters of the PN sequence may be predefined or (pre)configured, and the PN sequence generated by using the one or more parameters may indicate that the heartbeat data packet arrives. The one or more parameters include, for example, an initial value (for example, the foregoing $C_{inti}$) of the sequence, or a variable and/or a constant (for example, $N_C$ in the foregoing formula (2)) for determining the initial value. The initial value of the sequence may be predefined or (pre)configured, or may be obtained through calculation based on another parametric value, for example, obtained through calculation based on one or more parameters in the foregoing formula (4).

The network apparatus indicates, to the terminal apparatus by using the first sequence, that the first data packet arrives. The terminal apparatus may determine, based on the first sequence and a previously received second data packet associated with the first data packet, valid information included in an original first data packet. To be specific, even if the network apparatus does not send, to the terminal apparatus, all content included in the first data packet, the terminal apparatus can also determine all the content included in the first data packet, and subsequent execution of the terminal apparatus is not affected. Because the network apparatus indicates, to the terminal apparatus, that the first data packet arrives, resource overheads can be saved. In addition, the terminal apparatus may process different heartbeat data packets in a same processing manner, so that processing complexity can be reduced, and processing latency can be reduced.

(2) In the first transmission manner, transmission is performed by using the sequence, and the first information may be a sequence, to indicate the partial content included in the first data packet. An example in which the first information is a second sequence is used. The second sequence may indicate the partial content included in the first data packet. The network apparatus sends the first information, in other words, the network apparatus sends the second sequence. If the first information is the second sequence, it may implicitly indicate that the partial content indicated by the second sequence belongs to the heartbeat data packet, or implicitly indicate that the first data packet arrives. In comparison with the first sequence, the second sequence may further indicate the partial content included in the first data packet, for example, a sequence number in the first data packet, to help the terminal apparatus restore an original first data packet.

That the second sequence indicates the partial content included in the first data packet includes that one or more parameters of the second sequence indicate the partial content included in the first data packet. The terminal apparatus obtains the second sequence, and determines, based on the one or more parameters of the second sequence, the content indicated by the second sequence. A type of the second sequence is not limited in this embodiment of this application. For example, the second sequence may be a ZC sequence, a PN sequence, or another possible sequence. Optionally, the second sequence is the PN sequence. In this case, complexity of the network apparatus can be reduced.

The second sequence may be determined by using one or more configured or predefined parameters. Different second sequences are generated by using one or more parameters that are different. Therefore, partial content included in different heartbeat data packets may be distinguished by using different parameter combinations, or partial content included in different heartbeat data packets may be indicated by different second sequences. An example in which the partial content is a sequence number is used. It is assumed that four sequences, for example, a sequence 1 to a sequence 4, may be generated by using different parameter combinations. The sequence 1 indicates a data packet whose sequence number is 00, a sequence 2 indicates a data packet whose sequence number is 01, a sequence 3 indicates a data packet whose sequence number is 10, and the sequence 4 indicates a data packet whose sequence number is 11.

An example in which the second sequence is the ZC sequence is used. One or more of the following parameters of the ZC sequence may be predefined or pre(configured): a root sequence number (for example, the foregoing v) of the sequence, a group number (for example, the foregoing u) of a sequence group to which the sequence belongs, or a change sequence (for example, the foregoing $\alpha$ and $\delta$) of a root sequence, to indicate the partial content included in the first data packet.

One or more parameters indicating the partial content included in the first data packet may be all parameters of the ZC sequence, or may be a part of parameters of the ZC sequence. For example, v, u, $\alpha$, and $\delta$ may be predefined or (pre)configured, to indicate the partial content included in the first data packet. Alternatively, v, $\alpha$, and $\delta$ are predefined or (pre)configured, to indicate the partial content included in the first data packet, and u indicates user information or other information. Alternatively, $\alpha$ and $\delta$ are predefined or (pre)configured, to indicate the partial content included in the first data packet, and u and v indicate user information or other information.

Optionally, the one or more parameters may be indirectly obtained based on another parametric value. For example, $M_{ZC}$ is determined by an allocated time-frequency resource, u, v, $\alpha$, and $\delta$ are configured by using RRC signaling or are directly or indirectly obtained based on other parametric values. For another example, $M_{ZC}$ is determined by an allocated time-frequency resource, u, v, and $\alpha$ are configured by using RRC signaling or are directly or indirectly obtained based on other parametric values, and a value of $\delta$ is specified in a protocol, for example, is specified to be 0. For another example, $M_{ZC}$ is determined by an allocated time-frequency resource, u and v are configured by using RRC signaling or are directly or indirectly obtained based on other parametric values, and values of $\alpha$ and $\delta$ are specified in a protocol, for example, are specified to be 0. For another example, $M_{ZC}$ is determined by an allocated time-frequency resource, u is configured by using RRC signaling or is directly or indirectly obtained based on another parametric value, and values of v, $\alpha$, and $\delta$ are specified in a protocol, for example, are specified to be 0.

An example in which the second sequence is the PN sequence is used. One or more of the following parameters of the PN sequence may be predefined or (pre)configured: an initial value (for example, the foregoing $C_{inti}$) of the sequence, or a variable and/or a constant for determining the initial value. For example, different $C_{inti}$ indicate different heartbeat data packets, or different $C_{inti}$ indicate different partial content. For example, a value of $C_{inti}$ is a second value, indicating a sequence number of 1; and the value of $C_{inti}$ is a third value, indicating a sequence number of 2. For another example, it is determined that a constant of $C_{inti}$ is a first value, indicating a sequence number of 1; and it is determined that the constant of $C_{inti}$ is a second value, indicating a sequence number of 2.

Optionally, when the second sequence is the PN sequence, additional bit information (for example, an N-bit sequence) may indicate the partial content included in the first data packet. In other words, that the network apparatus sends the first information is actually that the network apparatus sends the second sequence and the N-bit sequence. The second sequence indicates that the first data packet arrives or the arrived data packet is a heartbeat-type data packet, and information carried in the N-bit sequence is the partial content included in the first data packet. Optionally, the N-bit sequence is a sequence including elements "+1" and "-1", where N is a positive integer.

(3) In the first transmission manner, transmission is performed by using the control channel, and the first information may be a control channel carrying control information in a specific format. The network apparatus sends the first information, in other words, the network apparatus sends the control channel carrying scheduling of the control information in the specific format. An example in which the specific format is a first format, the control information is DCI, and the control channel is a PDCCH is used. The network apparatus sends the PDCCH carrying scheduling of the DCI in the first format, and may indicate that the first data packet arrives.

The first format may be a newly defined format. The "newly defined format" may be a format other than a DCI format that already exists before this embodiment of this application. In this case, the DCI in the first format may indicate that the first data packet arrives.

Alternatively, the first format may be a format that has been defined. The "format that has been defined" is a DCI format that has been defined before this embodiment of this application. In this case, an indication field of the DCI in the first format may indicate that the first data packet arrives. The indication field may be a newly defined indication field. The "newly defined indication field" is an indication field, other than an indication field that already exists before this embodiment of this application, in the DCI in the first format that has been defined. The indication field may be one or more indication fields.

Alternatively, a first status value of the indication field of the DCI in the first format indicates that the first data packet arrives. In this case, the DCI in the first format may be in a DCI format that has been defined, and the indication field may alternatively be an indication field that has been defined. A quantity of bits occupied by the indication field may be a quantity of bits occupied by an original indication field, or a quantity of bits occupied by the indication field may be extended. The first status value may be a status value of the indication field.

(4) In the first transmission manner, transmission is performed by using the control channel, and the first information may be a control channel in a specific format, and indicate the partial content included in the first data packet. An example in which the specific format is a first format, and the control channel is a PDCCH is used. The network apparatus sends the first information, in other words, the network apparatus sends the PDCCH in the first format. The PDCCH in the first format may indicate the partial content included in the first data packet. Design ideas of PUCCH formats 0, 1, 3, and 4 may still be used for the PDCCH in the first format. It may be understood that the PUCCH formats 0, 1, 3, and 4 are implemented in a sequence manner. A first format may be a newly defined format or a format that has been defined. The "format that has been defined" is a format that has been defined before this embodiment of this application. The "newly defined format" may be a format other than a PDCCH format that already exists before this embodiment of this application.

When the first format is the newly defined format, the control channel in the first format may indicate the partial content included in the first data packet.

Alternatively, the first format may be the format that has been defined, and a first sequence of the control channel in the first format may indicate content included in the first data packet. The first sequence may be a newly defined sequence, or the first sequence is a sequence generated based on a predefined base sequence. The first sequence may be a ZC sequence or a PN sequence. For details, refer to the foregoing related content.

Alternatively, the first format may be the format that has been defined, and one or more parameters of a first sequence of the control channel in the first format indicate the partial content included in the first data packet. A base sequence for generating the first sequence may be predefined. The one or more parameters of the first sequence may be parameters that have been defined or newly defined parameters. The first sequence may be the predefined base sequence, and the one or more parameters may be predefined parameters, or the one or more parameters may be the newly defined parameters. The first sequence may be a ZC sequence or a PN sequence. For details, refer to the foregoing related content.

Alternatively, the first format is the newly defined format, and the control channel in the first format includes an N-bit indication field, where the N-bit indication field may indicate the partial content included in the first data packet, and N is a positive integer.

Alternatively, the first format is the format that has been defined, and the control channel in the first format includes an N-bit indication field, where the N-bit indication field may indicate the partial content included in the first data. The N-bit indication field may be a newly defined indication field, where N is a positive integer. The "newly defined indication field" is an indication field, other than an indication field that already exists before this embodiment of this application, in DCI in the first format that has been defined.

Alternatively, the first format is the format that has been defined, and the control channel in the first format includes an N-bit indication field, where M status values of the N-bit indication field may indicate the partial content included in the first data packet, and N and M are positive integers. The N-bit indication field may be an indication field that has been defined. The M status values are status values of the N-bit indication field.

The network apparatus may send the first information in one or more of the foregoing first transmission manners. Certainly, in a possible implementation, the network apparatus may also reuse the second transmission manner (that is, the transmission manner shown in FIG. 4) to send, to the terminal apparatus, partial information included in the first data packet, and resources can also be saved.

It may be understood that, for the incremental data packet, the network apparatus needs to configure some information for transmission of the incremental data packet, for example, time-frequency resource information, a modulation and coding scheme (modulation and coding scheme, MCS), and precoding information. For example, in the foregoing implementation forms (1), (2), and (4) of the first transmission manner, for the heartbeat data packet, the network apparatus may configure sequence information and/or the time-frequency resource information, and does not need to configure the MCS. Therefore, the first data packet is indicated in the first transmission manner. In this case, processing complexity of the network apparatus can be further reduced.

For the incremental data packet and the heartbeat data packet, the network apparatus may further configure, for the terminal apparatus, a transmission manner corresponding to a resource, so that the terminal apparatus receives a data packet from the network apparatus in a proper transmission manner. For example, a transmission manner corresponding to a resource for transmission of the incremental data packet is the second transmission manner, and a transmission manner corresponding to a resource for transmission of the heartbeat data packet is the first transmission manner. The terminal apparatus receives a data packet in the second transmission manner on the resource for transmission of the incremental data packet, and receives a data packet in the first transmission manner on the resource for transmission of the heartbeat data packet.

For example, the network apparatus may further send a configuration message to the terminal apparatus, where the configuration message is used to configure X transmission opportunities, transmission manners corresponding to the X transmission opportunities include the first transmission manner and the second transmission manner, and X is an integer greater than or equal to 2. Whether a data packet carried on a transmission opportunity is the heartbeat data packet or the incremental data packet may be implicitly indicated by configuring a transmission manner for the transmission opportunity. If a transmission manner on a transmission opportunity is the first transmission manner, a data packet of which transmission is performed on the transmission opportunity is the heartbeat data packet. If a transmission manner on a transmission opportunity is the second transmission manner, a data packet of which transmission is performed on the transmission opportunity is the incremental data packet. No additional signaling is needed for indication, so that signaling overheads can be reduced.

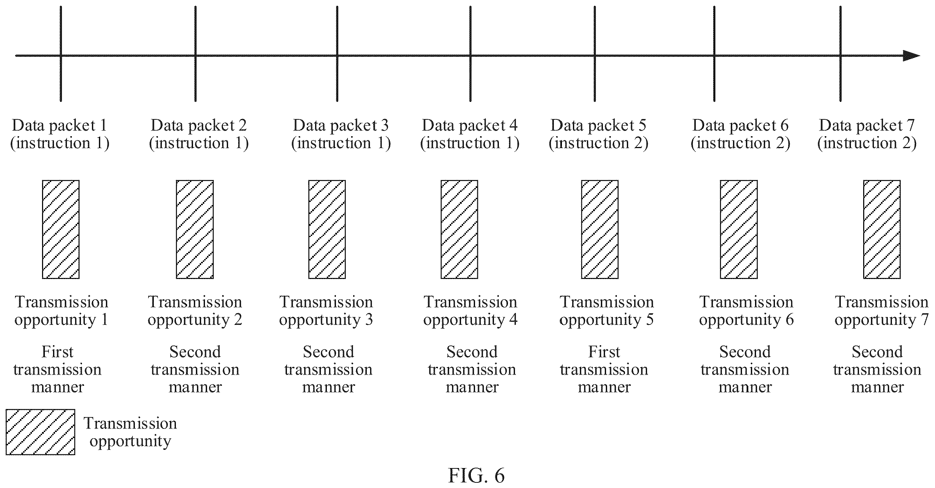

For example, FIG. 6 is a diagram of a data packet transmission manner. In FIG. 6, an example in which a control end sequentially sends nine data packets, to be specific, a data packet 1 to a data packet 7, is used. The data packet 1 is an incremental data packet, the data packet 2 to the data packet 4 are heartbeat data packets, the data packet 5 is an incremental data packet, and the data packet 6 and the data packet 7 are heartbeat data packets. The network apparatus may configure seven transmission opportunities for the terminal apparatus. The seven transmission opportunities are sequentially a transmission opportunity 1 to a transmission opportunity 7. The network apparatus separately configures transmission manners corresponding to the seven transmission opportunities. For example, transmission manners corresponding to the transmission opportunity 1 and the transmission opportunity 5 are the first transmission manner, and transmission manners corresponding to the transmission opportunity 2 to the transmission opportunity 4, the transmission opportunity 6, and the transmission opportunity 7 are the second transmission manner. The terminal apparatus determines to receive a data packet/information on a transmission opportunity i, and the terminal apparatus may determine, based on the configuration message sent by the network apparatus, a transmission manner matching the transmission opportunity i, and receive the data packet/information from the network apparatus in the determined transmission manner.

The network apparatus may configure, by using one or more of RRC signaling, MAC CE signaling, or DCI signaling, transmission manners respectively corresponding to X transmission opportunities. The following describes, with reference to Example 1 to Example 3, how the network apparatus configures the transmission manners respectively corresponding to the X transmission opportunities.

Example 1: The network apparatus sends first indication information. The first indication information may indicate a first transmission manner combination, and the first transmission manner combination includes the transmission manners that are in one-to-one correspondence with the X transmission opportunities. The first indication information may be an RRC message. If a regularity of a data packet to be sent by the control end changes, correspondingly, the transmission manners corresponding to the X transmission opportunities also change. In this case, the network apparatus may reconfigure, by using the RRC message, the transmission manners corresponding to the X transmission opportunities.

Example 2: A group of transmission manner combinations may be (pre)configured by using an RRC message, and each transmission manner combination includes a plurality of transmission manners that are in one-to-one correspondence with a plurality of transmission opportunities. Then, the network apparatus may activate a first transmission manner combination in the group of transmission manner combinations. For example, the network apparatus sends second indication information, where the second indication information may be used to configure a first group of transmission manner combinations. Then, the network apparatus sends the MAC CE signaling to activate the first transmission manner combination in the first group of transmission manner combinations. If a regularity of a data packet to be sent by the control end changes, correspondingly, the network apparatus may activate another transmission manner combination in the first group of transmission manner combinations, for example, a second transmission manner combination, by using the MAC CE signaling.

Example 3: A plurality of groups of transmission manner combinations may be (pre)configured by using an RRC message, and the network apparatus may activate one of the plurality of groups of transmission manner combinations, and then activate a transmission manner combination in the activated group of transmission manner combinations. For example, the plurality of groups of transmission manner combinations may be configured by using the RRC message, and the network apparatus activates a first group of transmission manner combinations in the plurality of groups of transmission manner combinations by using the MAC CE signaling, and then activates a first transmission manner combination from the first group of transmission manner combinations by using the DCI signaling.

When a regularity of a data packet to be sent by the control end changes, correspondingly, the first transmission manner combination changes to a second transmission manner combination. If the second transmission manner combination belongs to the first group of transmission manner combinations, the network apparatus may activate the second transmission manner combination in the first group of transmission manner combinations by using the DCI signaling. If the second transmission manner combination does not belong to the first group of transmission manner combinations but belongs to a second group of transmission manner combinations, the network apparatus may activate the second group of transmission manner combinations in the plurality of configured groups of transmission manner combinations by using the MAC CE signaling, and then activate the second transmission manner combination in the second group of transmission manner combinations by using the DCI signaling.

It should be noted that a configuration of a transmission manner may not be associated with a configuration of a resource. In other words, the network apparatus may separately configure, for the terminal apparatus, a resource for transmission of the first data packet, and does not need to configure a transmission manner of the first data packet. Alternatively, the network apparatus may separately configure a transmission manner of a data packet for the terminal apparatus. For example, a transmission manner of the first data packet is the first transmission manner, and a transmission manner of the second data packet is the second transmission manner.

S503: The terminal apparatus restores the first data packet based on the first information.

The terminal apparatus receives the first information, and may execute, based on the first information, a control instruction included in the first data packet. For example, the terminal apparatus is a terminal apparatus integrating the control end. The terminal apparatus may execute, based on the first information, the control instruction included in the first data packet. Alternatively, the terminal apparatus and the control end are independent of each other. The terminal apparatus may restore the first data packet based on the first information and send the restored first data packet to the control end, and the control end executes the control instruction included in the first data packet.

That the terminal apparatus restores the first data packet based on the first information may include: The terminal apparatus restores the first data packet based on the first information and the second data packet. The second data packet is associated with the first data packet, or a control instruction included in the second data packet is the same as the control instruction included in the first data packet. For example, the second data packet may be an incremental data packet corresponding to the first data packet; or the second data packet may be a heartbeat data packet corresponding to the first data packet.

As described above, the control end periodically sends the data packet, and correspondingly, the terminal apparatus receives a plurality of incremental data packets and a plurality of pieces of first information. Second data packets associated with different first information are also different. Because the control end sends the data packet according to a specific regularity, the example shown in (a) in FIG. 2 is used as an example, and the second data packet associated with the first information is an incremental data packet whose receiving time point is closest to a receiving time point of the first information. In this case, the terminal apparatus may determine, as the second data packet associated with the first information, the incremental data packet whose receiving time point is closest to the receiving time point of the first information. Alternatively, the terminal apparatus may determine, as the second data packet associated with the first information, a heartbeat data packet whose receiving time point is closest to the receiving time point of the first information.

If the network apparatus notifies the terminal apparatus of the regularity of the data packet sent by the control end, the terminal apparatus may determine, according to the regularity, the second data packet associated with the received first information. The network apparatus may indicate, by using a pattern (pattern) of the data packet sent by the control end, the regularity of the data packet sent by the control end. For example, a pattern shown in (a) in FIG. 2 may be "ABBBABB", and a pattern shown in (b) in FIG. 2 may be "ABABABA".

The network apparatus may indicate, by using one or more of RRC signaling, MAC CE signaling, or DCI signaling, the pattern of the data packet sent by the control end.

Example 1: The network apparatus may indicate a first pattern by using the RRC signaling, where the first pattern includes types of a plurality of data packets. If the regularity of the data packet to be sent by the control end changes, correspondingly, the network apparatus may reconfigure, by using the RRC signaling, the pattern of the data packet sent by the control end.

Example 2: The network apparatus may (pre)configure a group of patterns by using the RRC message, where each group of patterns includes at least one pattern. Then, the network apparatus may activate a first pattern in the group of patterns. For example, the network apparatus activates the first pattern in the group of patterns by using the MAC CE signaling. If the regularity of the data packet to be sent by the control end changes, correspondingly, the network apparatus may activate another pattern in the group of patterns, for example, a second pattern, by using the MAC CE signaling.

Example 3: A plurality of groups of patterns may be (pre)configured by using the RRC message, and the network apparatus may activate one of the plurality of groups of patterns, and then activate a pattern in the activated group of patterns. For example, the plurality of groups of patterns may be configured by using the RRC message. The network apparatus activates a first group of patterns in the plurality of groups of patterns by using the MAC CE signaling, and then activates a first pattern from the first group of patterns by using the DCI signaling.

S504: The terminal apparatus executes the control instruction in the first data packet.

If the terminal apparatus and the execution end are designed in an integrated manner, after restoring the first data packet, the terminal apparatus may execute the control instruction in the first data packet (which is used as an example in FIG. 5, and is shown by using a dashed line). Alternatively, if the terminal apparatus and the execution end are independent of each other, the terminal apparatus may transfer the first data packet to the execution end, and the execution end executes the control instruction in the received first data packet. For the execution end, received data packets are processed in an undifferentiated manner, that is, the received data packets are processed in a same processing manner, thereby reducing processing complexity and reducing processing latency.

If the first information indicates that the first data packet arrives, the terminal apparatus may update a sequence number in the second data packet to a sequence number in the original first data packet, and an updated data packet is the original first data packet. (a) in FIG. 2 is used as an example. After receiving an incremental data packet, the terminal apparatus may subsequently receive the first information in a predefined or (pre)configured manner, and number the received first information as the sequence number that is in the first data packet and that is identified by the first information, to restore the original first data packet. Alternatively, the terminal apparatus may determine, based on the pattern of the data packet sent by the control end, the sequence number (for example, a first sequence number) in the first data packet corresponding to the obtained first information, and update the sequence number in the second data packet to the first sequence number, and an updated data packet is the original first data packet.

In FIG. 5, an example in which the first data packet is from the control end to the network apparatus, then to the terminal apparatus, and finally to the execution end is used. The method provided in this embodiment of this application is also applicable to a case in which the execution end feeds back status information to the control end via the terminal apparatus and the network apparatus. That the terminal apparatus sends the status information of the execution end to the network apparatus may be similar to that the network apparatus sends the heartbeat data packet to the terminal apparatus. In other words, the terminal apparatus may also transfer the status information of the execution end to the network apparatus by using one or more of the sequence, the control channel, and the pilot. Differences lie in that a control channel sent by the network apparatus is the PDCCH, and a control channel sent by the terminal apparatus is the PUCCH; and control information sent by the network apparatus is the DCI, and control information sent by the terminal apparatus is UCI. For an implementation in which the terminal apparatus transfers the status information of the execution end to the network apparatus by using one or more of the sequence, the control channel, and the pilot, refer to that the network apparatus may also transfer a data packet of the control end to the terminal apparatus by using one or more of the sequence, the control channel, and the pilot. Details are not described herein again.

In this embodiment provided in this application, the method provided in embodiments of this application is described from the perspective of the interaction between the terminal apparatus and the network apparatus. The steps performed by the network apparatus may alternatively be separately implemented by different communication apparatuses. For example, the network apparatus includes a third apparatus and a fourth apparatus. The third apparatus is configured to generate the first information, and the fourth apparatus is configured to send the first information. In other words, the third apparatus and the fourth apparatus jointly complete the steps performed by the network apparatus in this embodiment of this application. A specific division manner is not limited in this application. When a network architecture includes one or more DUs, one or more CUs, and one or more radio units (radio units, RUs), the steps performed by the network apparatus may be separately implemented by the DU, the CU, and the RU. To implement functions in the foregoing method provided in embodiments of this application, the terminal apparatus and the network apparatus may include a hardware structure and/or a software module, and implement the foregoing functions in a form of the hardware structure, the software module, or a combination of the hardware structure and the software module. Whether a function in the foregoing functions is performed in a manner of the hardware structure, the software module, or the combination of the hardware structure and the software module depends on a particular application and a design constraint of the technical solutions.

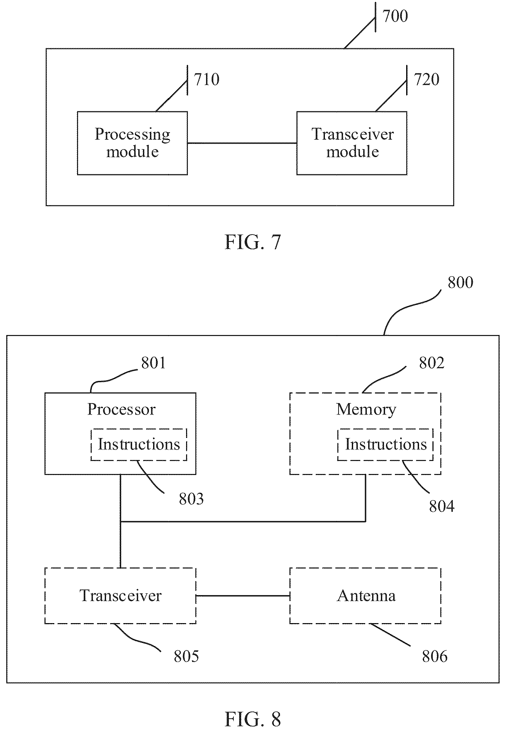

FIG. 7 is a block diagram of a communication apparatus 700 according to an embodiment of this application. The communication apparatus 700 may correspondingly implement the functions or the steps implemented by the terminal apparatus or the network apparatus in the foregoing method embodiments. The communication apparatus 700 may include a processing module 710 and a transceiver module 720. Optionally, a storage unit may be further included. The storage unit may be configured to store instructions (code or a program) and/or data. The processing module 710 and the transceiver module 720 may be coupled to the storage unit. For example, the processing module 710 may read the instructions (the code or the program) and/or the data in the storage unit, to implement a corresponding method. The foregoing units may be independently disposed, or may be partially or completely integrated.

It should be understood that the processing module 710 may be a processor or a controller, for example, may be a general-purpose central processing unit (central processing unit, CPU), a general-purpose processor, digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuit described with reference to content disclosed in this application. Alternatively, the processor may be a combination for implementing a calculation function, for example, a combination including one or more microprocessors, or a combination of a DSP and a microprocessor. The transceiver module 720 is an interface circuit of the apparatus, and is configured to receive a signal from another apparatus. For example, when the apparatus is implemented in a form of a chip, the transceiver module 720 is an interface circuit used by the chip to receive a signal from another chip or apparatus, or is an interface circuit used by the chip to send a signal to another chip or apparatus.

The communication apparatus 700 may be the network apparatus or the terminal apparatus in the foregoing embodiments, or may be a functional module in a network device or a terminal device. For example, the communication apparatus is a chip (system) in the network device or the terminal device. When the communication apparatus 700 is a network device or a terminal device, the processing module 710 may be, for example, the processor, and the transceiver module 720 may be, for example, a transceiver. Optionally, the transceiver may include a radio frequency circuit, and the storage unit may be, for example, a memory. For example, when the communication apparatus 700 is a chip used in a network device or a terminal device, the processing module 710 may be, for example, a processor, and the transceiver module 720 may be, for example, an input/output interface, a pin, or a circuit. The processing module 710 may execute computer-executable instructions stored in the storage unit. Optionally, the storage unit is a storage unit in the chip, for example, a register or a buffer. Alternatively, the storage unit may be a storage unit that is in the network device, the terminal device, or a location management device and that is located outside the chip, for example, a read-only memory (read-only memory, ROM), another type of static storage device that can store static information and instructions, or a random access memory (random access memory, RAM).

In some possible implementations, the communication apparatus 700 can correspondingly implement behavior and functions of the network apparatus in the foregoing method embodiments, for example, implement the method performed by the network apparatus in the embodiment in FIG. 5. For example, the communication apparatus 700 may be the network device, may be a component (for example, a chip or a circuit) used in the network device, or may be a chip or a chip set in the network device or a part that is of the chip and that is configured to perform a related method function. For example, the transceiver module 720 may be configured to perform S502 in the embodiment shown in FIG. 5, and/or configured to support another process of the technology described in this specification. The processing module 710 is configured to perform S501 in the embodiment shown in FIG. 5, and/or configured to support another process of the technology described in this specification.

For example, the transceiver module 720 is configured to receive first information, where the first information indicates that a first data packet arrives or indicates partial content included in the first data packet. The processing module 710 is configured to: restore the first data packet based on the first information, and execute a control instruction included in the first data packet, where the control instruction is used to control a first apparatus.

In an optional implementation, the first information is a first sequence, and the first sequence indicates that the first data packet arrives.

Optionally, the first sequence is determined by a configured or predefined parameter, where the first sequence is a (Zadoff-Chu, ZC) sequence, and the parameter includes one or more of the following: a length of the sequence, a root sequence number of the sequence, a group number of a sequence group to which the sequence belongs, or a change sequence based on a root sequence; or the first sequence is a pseudo-noise (Pseudo-Noise, PN) sequence, and the parameter includes an initial value of the PN sequence, or a variable and/or a constant for determining an initial value of the PN sequence.

In an optional implementation, the first information is a second sequence, and one or more parameters of the second sequence indicate the partial content included in the first data packet.

Optionally, the second sequence is determined by a configured or predefined parameter, where the second sequence is a ZC sequence, and the parameter includes one or more of the following: a length of the sequence, a root sequence number of the sequence, a group number of a sequence group to which the sequence belongs, or a change sequence based on a root sequence; or the second sequence is a PN sequence, and the parameter includes an initial value of the PN sequence, or a variable and/or a constant for determining an initial value of the PN sequence.

In an optional implementation, the first information is a control channel in a first format, where the control channel in the first format indicates the partial content included in the first data packet, a first sequence of the control channel in the first format indicates the partial content included in the first data packet, or one or more parameters of a first sequence of the control channel in the first format indicate the partial content included in the first data packet.

In an optional implementation, the first information is control information in a first format, where the control information in the first format indicates that the first data packet arrives, an indication field of the control information in the first format indicates that the first data packet arrives, or a first status value of an indication field of the control information in the first format indicates that the first data packet arrives.

In an optional implementation, a control channel scheduled by using the control information in the first format carries the partial content included in the first data packet.

In an optional implementation, the first information is a data channel, and the data channel carries the partial content included in the first data packet.

In an optional implementation, the processing module 710 is further configured to generate the first data packet based on the first information and a second data packet.

In an optional implementation, that the transceiver module 720 is configured to receive the first information includes: The transceiver module 720 receives the first information in a target transmission manner. The target transmission manner belongs to at least two transmission manners, and the at least two transmission manners are a first transmission manner and a second transmission manner. The first transmission manner is transmission by using one or more of a control channel, a sequence, or a pilot, and the second transmission manner is transmission through a data channel. The target transmission manner is the first transmission manner.

In an optional implementation, the transceiver module 720 is further configured to receive a configuration message, where the configuration message is used to configure X transmission opportunities, transmission manners corresponding to the X transmission opportunities include the first transmission manner and the second transmission manner, and X is an integer greater than or equal to 2.

In an optional implementation, the transceiver module 720 is further configured to receive first indication information, where the first indication information is used to configure or activate a first transmission manner combination, and the first transmission manner combination includes transmission manners that are in one-to-one correspondence with a plurality of transmission opportunities.

In an optional implementation, the transceiver module 720 is further configured to receive second indication information, where the second indication information is used to configure a first group of transmission manner combinations, each transmission manner combination includes a plurality of transmission manners that are in one-to-one correspondence with a plurality of transmission opportunities, and the first group of transmission manner combinations includes a first transmission manner combination.

In an optional implementation, the transceiver module 720 is further configured to receive third indication information, where the third indication information is used to configure a plurality of groups of transmission manner combinations, and the plurality of groups of transmission manner combinations include a first group of transmission manner combinations.

In some possible implementations, the communication apparatus 700 can correspondingly implement behavior and functions of the terminal apparatus in the foregoing method embodiments, for example, implement the method performed by the terminal apparatus in the embodiment in FIG. 5. The communication apparatus 700 may be the terminal device, may be a component (for example, a chip or a circuit) used in the terminal device, or may be a chip or a chip set in the terminal device or a part that is of the chip and that is configured to perform a related method function. For example, the transceiver module 720 may be configured to perform S502 in the embodiment shown in FIG. 5, and/or configured to support another process of the technology described in this specification. The processing module 710 is configured to perform S503 in the embodiment shown in FIG. 5, and/or configured to support another process of the technology described in this specification.

For example, the transceiver module 720 is configured to: receive a first data packet, and send first information to a first apparatus. The first data packet is associated with a second data packet, and a control instruction included in the second data packet is used to control the first apparatus. The first information indicates that the first data packet arrives or indicates partial content included in the first data packet. The processing module 710 is configured to determine that the first data packet is a heartbeat data packet.

In an optional implementation, the first information is a first sequence, and the first sequence indicates that the first data packet arrives.

In an optional implementation, the first sequence is determined by a configured or predefined parameter, where the first sequence is a ZC sequence, and the parameter includes one or more of the following: a length of the sequence, a root sequence number of the sequence, a group number of a sequence group to which the sequence belongs, or a change sequence based on a root sequence; or the first sequence is a PN sequence, and the parameter includes an initial value of the PN sequence, or a variable and/or a constant for determining an initial value of the PN sequence.

In an optional implementation, the first information is a second sequence, and one or more parameters of the second sequence indicate the partial content included in the first data packet.

In an optional implementation, the second sequence is determined by a configured or predefined parameter, where the second sequence is a ZC sequence, and the parameter includes one or more of the following: a length of the sequence, a root sequence number of the sequence, a group number of a sequence group to which the sequence belongs, or a change sequence based on a root sequence; or the second sequence is a PN sequence, and the parameter includes an initial value of the PN sequence, or a variable and/or a constant for determining an initial value of the PN sequence.

In an optional implementation, the first information is a control channel in a first format, where the control channel in the first format indicates the partial content included in the first data packet, a first sequence of the control channel in the first format indicates the partial content included in the first data packet, or one or more parameters of a first sequence of the control channel in the first format indicate the partial content included in the first data packet.

In an optional implementation, the first information is control information in a first format, where the control information in the first format indicates that the first data packet arrives, an indication field of the control information in the first format indicates that the first data packet arrives, or a first status value of an indication field of the control information in the first format indicates that the first data packet arrives.

In an optional implementation, a control channel scheduled by using the control information in the first format carries the partial content included in the first data packet.

In an optional implementation, the transceiver module 720 is further configured to send a configuration message, where the configuration message is used to configure X transmission opportunities, transmission manners corresponding to the X transmission opportunities include the first transmission manner and the second transmission manner, and X is an integer greater than or equal to 2.

In an optional implementation, the transceiver module 720 is further configured to send first indication information, where the first indication information is used to configure or activate a first transmission manner combination, and the first transmission manner combination includes transmission manners that are in one-to-one correspondence with a plurality of transmission opportunities.

In an optional implementation, the transceiver module 720 is further configured to send second indication information, where the second indication information is used to configure a first group of transmission manner combinations, each transmission manner combination includes a plurality of transmission manners that are in one-to-one correspondence with a plurality of transmission opportunities, and the first group of transmission manner combinations includes a first transmission manner combination.

In an optional implementation, the transceiver module 720 is further configured to send third indication information, where the third indication information is used to configure a plurality of groups of transmission manner combinations, and the plurality of groups of transmission manner combinations include a first group of transmission manner combinations.

When the communication apparatus 700 is a chip-type apparatus or circuit, the transceiver module may be an input/output circuit and/or a communication interface, and the processing module is an integrated processor, a microprocessor, or an integrated circuit.

FIG. 8 is a block diagram of a communication apparatus 800 according to an embodiment of this application. The communication apparatus 800 may be a terminal apparatus, and can implement a function of the terminal apparatus in the methods provided in embodiments of this application. Alternatively, the communication apparatus 800 may be an apparatus that can support a terminal apparatus in implementing a corresponding function in the methods provided in embodiments of this application. Alternatively, the communication apparatus 800 may be a network apparatus, and can implement a function of the network apparatus in the methods provided in embodiments of this application. Alternatively, the communication apparatus 800 may be an apparatus that can support a network apparatus in implementing a corresponding function in the methods provided in embodiments of this application. The communication apparatus 800 may be a chip system. In embodiments of this application, the chip system may include a chip, or may include a chip and another discrete component. For a specific function, refer to the descriptions of the foregoing method embodiments.

The communication apparatus 800 includes one or more processors 801, configured to implement or support the communication apparatus 800 in implementing a function of the terminal device or the network device in the methods provided in embodiments of this application. For details, refer to the detailed descriptions in the method examples. Details are not described herein again. The processor 801 may also be referred to as a processing unit or a processing module, and may implement a specific control function. The processor 801 may be a general-purpose processor, a dedicated processor, or the like. For example, the processor 801 includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to: control the communication apparatus 800, execute a software program, and/or process data. Different processors may be independent components, or may be integrated into one or more processors, for example, integrated into one or more application-specific integrated circuits.

Optionally, the communication apparatus 800 includes one or more memories 802, to store instructions 804. The instructions may be run on the processor 801, so that the communication apparatus 800 performs the method described in the foregoing method embodiments. The memory 802 is coupled to the processor 801. The coupling in this embodiment of this application may be an indirect coupling or a communication connection between apparatuses, units, or modules in an electrical form, a mechanical form, or another form, and is used for information exchange between the apparatuses, the units, or the modules. The processor 801 may cooperate with the memory 802. At least one of the at least one memory may be included in the processor. It should be noted that the memory 802 is not necessary, and therefore is shown by using dashed lines in FIG. 8.

Optionally, the memory 802 may further store data. The processor and the memory may be disposed separately, or may be integrated together. In this embodiment of this application, the memory 802 may be a non-volatile memory, for example, a hard disk drive (hard disk drive, HDD) or a solid-state drive (solid-state drive, SSD), or may be a volatile memory (volatile memory), for example, a RAM. The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or the data.

Optionally, the communication apparatus 800 may include instructions 803 (which may also be referred to as code or a program sometimes), and the instructions 803 may be run on the processor, so that the communication apparatus 800 performs the method described in the foregoing embodiments. The processor 801 may store data.

Optionally, the communication apparatus 800 may further include a transceiver 805 and an antenna 806. The transceiver 805 may be referred to as a transceiver unit, a transceiver module, a transceiver machine, a transceiver circuit, a transceiver, an input/output interface, or the like, and is configured to implement a transceiver function of the communication apparatus 800 through the antenna 806.

The processor 801 and the transceiver 805 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device or the terminal apparatus. Details are not described herein again.

Optionally, the communication apparatus 800 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 800 may include more or fewer components, or some components may be integrated, or some components may be split. The components may be implemented by hardware, software, or a combination of software and hardware.

It should be noted that the communication apparatus in the foregoing embodiments may be a terminal device (or a network device), may be a circuit, or may be a chip used in the terminal device (or the network device), another combined device, component, or the like that has a function of the terminal device (or the network device). When the communication apparatus is the terminal device (or the network device), the transceiver module may be a transceiver, and may include an antenna, a radio frequency circuit, and the like, and the processing module may be a processor, for example, a CPU. When the communication apparatus is a component having a function of the foregoing terminal device (or the network device), the transceiver module may be a radio frequency unit, and the processing module may be a processor. When the communication apparatus is the chip system, the communication apparatus may be an FPGA, a dedicated ASIC, a system on chip (system on chip, SoC), a CPU, a network processor (network processor, NP), a DSP, a micro-controller unit (micro-controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver machine.

An embodiment of this application further provides a communication system. Specifically, the communication system includes at least one terminal apparatus, and may further include at least one network apparatus. For example, the communication system includes a terminal apparatus configured to implement a related function in FIG. 5 and a network apparatus configured to implement a related function in FIG. 5. Alternatively, the communication system includes at least one terminal device and at least one network device. For example, the communication system includes a terminal device configured to implement a function related to the terminal apparatus in FIG. 5 and a network device configured to implement a function related to the network apparatus in FIG. 5. For details, refer to the related descriptions in the foregoing method embodiments. Details are not described herein again.

An embodiment of this application further provides a system. Specifically, the system includes at least one terminal apparatus, at least one network apparatus, and a control end. The terminal apparatus may be an execution end, for example, a mechanical arm. Alternatively, an embodiment of this application further provides a system. Specifically, the system includes at least one terminal apparatus, at least one network apparatus, a control end, and an execution end.

An embodiment of this application further provides a computer-readable storage medium, including instructions. When the instructions are run on a computer, the computer is caused to perform the method performed by the terminal apparatus or the network apparatus in FIG. 5.

An embodiment of this application further provides a computer program product, including instructions. When the instructions are run on a computer, the computer is caused to perform the method performed by the terminal apparatus or the network apparatus in FIG. 5.

An embodiment of this application provides a chip system. The chip system includes a processor, may further include a memory, and is configured to implement a function of the terminal apparatus or the network apparatus in the foregoing methods. The chip system may include a chip, or may include a chip and another discrete component.

To implement functions of the communication apparatuses in FIG. 7 to FIG. 8, an embodiment of this application further provides a chip, including a processor, configured to support the communication apparatus in implementing a function of the terminal apparatus or the network apparatus in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether these functions are performed in a manner of hardware or software depends on a particular application and a design constraint of the technical solutions. A person skilled in the art may use different methods to implement the described functions for each particular application, but it should not be considered that the implementation goes beyond the scope of this application.

It may be clearly understood by a person skilled in the art that, for convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

EP 4 683 256 A1

The units described as separate parts may or may not be physically separate, and parts displayed as units may or may not be physical units, may be located in one place, or may be distributed on a plurality of network units. A part or all of the units may be selected based on an actual requirement to achieve an objective of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for causing a computer device (which may be a personal computer, a server, a network device, or the like) to perform all or a part of the steps of the methods in embodiments of this application. The foregoing storage medium includes any medium that can store program code, such as a USB flash drive, a removable hard disk drive, a ROM, a RAM, a magnetic disk, or an optical disc.

It is clear that a person skilled in the art can make various modifications and variations to this application without departing from the scope of this application. In this way, provided that these modifications and variations of this application fall within the scope of the claims of this application and equivalent technologies thereof, this application is also intended to cover these modifications and variations.

## Claims

1.  A communication method, comprising:

    receiving, by a first apparatus, first information, wherein the first information indicates that a first data packet arrives or indicates partial content comprised in a first data packet;
    restoring, by the first apparatus, the first data packet based on the first information; and
    executing, by the first apparatus, a control instruction comprised in the first data packet, wherein the control instruction is used to control the first apparatus.

2.  The method according to claim 1, wherein the first information is a first sequence, and the first sequence indicates that the first data packet arrives.

3.  The method according to claim 2, wherein the first sequence is determined by a configured or predefined parameter, wherein

    the first sequence is a ZC sequence, and the parameter comprises one or more of the following: a length of the sequence, a root sequence number of the sequence, a group number of a sequence group to which the sequence belongs, or a change sequence based on a root sequence; or
    the first sequence is a PN sequence, and the parameter comprises an initial value of the PN sequence, or a variable and/or a constant for determining an initial value of the PN sequence.

4.  The method according to claim 1, wherein the first information is a second sequence, and one or more parameters of the second sequence indicate the partial content comprised in the first data packet.

5.  The method according to claim 4, wherein the second sequence is determined by a configured or predefined parameter, wherein

    the second sequence is a ZC sequence, and the parameter comprises one or more of the following: a length of the sequence, a root sequence number of the sequence, a group number of a sequence group to which the sequence belongs, or a change sequence based on a root sequence; or
    the second sequence is a PN sequence, and the parameter comprises an initial value of the PN sequence, or a variable and/or a constant for determining an initial value of the PN sequence.

6.  The method according to claim 1, wherein the first information is a control channel in a first format, wherein the control channel in the first format indicates the partial content comprised in the first data packet, a first sequence of the control channel in the first format indicates the partial content comprised in the first data packet, or one or more parameters of a first sequence of the control channel in the first format indicate the partial content comprised in the first data packet.

7.  The method according to claim 1, wherein the first information is control information in a first format, wherein the control information in the first format indicates that the first data packet arrives, an indication field of the control information in the first format indicates that the first data packet arrives, or a first status value of an indication field of the control information in the first format indicates that the first data packet arrives.

8. The method according to claim 7, wherein a control channel scheduled by using the control information in the first format carries the partial content comprised in the first data packet.

9. A communication method, comprising:

receiving, by a second apparatus, a first data packet, wherein the first data packet is associated with a second data packet, and a control instruction comprised in the second data packet is used to control a first apparatus; and
sending, by the second apparatus, first information to the first apparatus, wherein the first information indicates that the first data packet arrives or indicates partial content comprised in the first data packet.

10. The method according to claim 9, wherein the first information is a first sequence, and the first sequence indicates that the first data packet arrives.

11. The method according to claim 10, wherein the first sequence is determined by a configured or predefined parameter, wherein

the first sequence is a ZC sequence, and the parameter comprises one or more of the following: a length of the sequence, a root sequence number of the sequence, a group number of a sequence group to which the sequence belongs, or a change sequence based on a root sequence; or
the first sequence is a PN sequence, and the parameter comprises an initial value of the PN sequence, or a variable and/or a constant for determining an initial value of the PN sequence.

12. The method according to claim 9, wherein the first information is a second sequence, and one or more parameters of the second sequence indicate the partial content comprised in the first data packet.

13. The method according to claim 12, wherein the second sequence is determined by a configured or predefined parameter, wherein

the second sequence is a ZC sequence, and the parameter comprises one or more of the following: a length of the sequence, a root sequence number of the sequence, a group number of a sequence group to which the sequence belongs, or a change sequence based on a root sequence; or
the second sequence is a PN sequence, and the parameter comprises an initial value of the PN sequence, or a variable and/or a constant for determining an initial value of the PN sequence.

14. The method according to claim 9, wherein the first information is a control channel in a first format, wherein the control channel in the first format indicates the partial content comprised in the first data packet, a first sequence of the control channel in the first format indicates the partial content comprised in the first data packet, or one or more parameters of a first sequence of the control channel in the first format indicate the partial content comprised in the first data packet.

15. The method according to claim 9, wherein the first information is control information in a first format, wherein the control information in the first format indicates that the first data packet arrives, an indication field of the control information in the first format indicates that the first data packet arrives, or a first status value of an indication field of the control information in the first format indicates that the first data packet arrives.

16. The method according to claim 15, wherein a control channel scheduled by using the control information in the first format carries the partial content comprised in the first data packet.

17. A communication apparatus, comprising a transceiver module and a processing module, wherein

the transceiver module is configured to receive first information, wherein the first information indicates that a first data packet arrives or indicates partial content comprised in a first data packet; and
the processing module is configured to: restore the first data packet based on the first information, and execute a control instruction comprised in the first data packet, wherein the control instruction is used to control the first apparatus.

18. The apparatus according to claim 17, wherein the first information is a first sequence, and the first sequence indicates that the first data packet arrives.

19. The apparatus according to claim 17, wherein the first sequence is determined by a configured or predefined parameter, wherein

the first sequence is a ZC sequence, and the parameter comprises one or more of the following: a length of the sequence, a root sequence number of the sequence, a group number of a sequence group to which the sequence belongs, or a change sequence based on a root sequence; or
the first sequence is a PN sequence, and the parameter comprises an initial value of the PN sequence, or a variable and/or a constant for determining an initial value of the PN sequence.

20. The apparatus according to claim 17, wherein the first information is a second sequence, and one or more parameters of the second sequence indicate the partial content comprised in the first data packet.

21. The apparatus according to claim 20, wherein the second sequence is determined by a configured or predefined parameter, wherein

the second sequence is a ZC sequence, and the parameter comprises one or more of the following: a length of the sequence, a root sequence number of the sequence, a group number of a sequence group to which the sequence belongs, or a change sequence based on a root sequence; or
the second sequence is a PN sequence, and the parameter comprises an initial value of the PN sequence, or a variable and/or a constant for determining an initial value of the PN sequence.

22. The apparatus according to claim 17, wherein the first information is a control channel in a first format, wherein the control channel in the first format indicates the partial content comprised in the first data packet, a first sequence of the control channel in the first format indicates the partial content comprised in the first data packet, or one or more parameters of a first sequence of the control channel in the first format indicate the partial content comprised in the first data packet.

23. The apparatus according to claim 17, wherein the first information is control information in a first format, wherein the control information in the first format indicates that the first data packet arrives, an indication field of the control information in the first format indicates that the first data packet arrives, or a first status value of an indication field of the control information in the first format indicates that the first data packet arrives.

24. The apparatus according to claim 17, wherein a control channel scheduled by using the control information in the first format carries the partial content comprised in the first data packet.

25. A communication apparatus, comprising a transceiver module and a processing module, wherein

the transceiver module is configured to: receive a first data packet, and send first information to a first apparatus, wherein the first information indicates that the first data packet arrives or indicate partial content comprised in the first data packet; and
the processing module is configured to determine that the first data packet is associated with a second data packet, wherein a control instruction comprised in the second data packet is used to control the first apparatus.

26. The apparatus according to claim 25, wherein the first information is a first sequence, and the first sequence indicates that the first data packet arrives.

27. The apparatus according to claim 26, wherein the first sequence is determined by a configured or predefined parameter, wherein

the first sequence is a ZC sequence, and the parameter comprises one or more of the following: a length of the sequence, a root sequence number of the sequence, a group number of a sequence group to which the sequence belongs, or a change sequence based on a root sequence; or
the first sequence is a PN sequence, and the parameter comprises an initial value of the PN sequence, or a variable and/or a constant for determining an initial value of the PN sequence.

28. The apparatus according to claim 25, wherein the first information is a second sequence, and one or more parameters of the second sequence indicate the partial content comprised in the first data packet.

29. The apparatus according to claim 28, wherein the second sequence is determined by a configured or predefined parameter, wherein

the second sequence is a ZC sequence, and the parameter comprises one or more of the following: a length of the sequence, a root sequence number of the sequence, a group number of a sequence group to which the sequence belongs, or a change sequence based on a root sequence; or

the second sequence is a PN sequence, and the parameter comprises an initial value of the PN sequence, or a variable and/or a constant for determining an initial value of the PN sequence.

30. The apparatus according to claim 25, wherein the first information is a control channel in a first format, wherein the control channel in the first format indicates the partial content comprised in the first data packet, a first sequence of the control channel in the first format indicates the partial content comprised in the first data packet, or one or more parameters of a first sequence of the control channel in the first format indicate the partial content comprised in the first data packet.

31. The apparatus according to claim 25, wherein the first information is control information in a first format, wherein the control information in the first format indicates that the first data packet arrives, an indication field of the control information in the first format indicates that the first data packet arrives, or a first status value of an indication field of the control information in the first format indicates that the first data packet arrives.

32. The apparatus according to claim 31, wherein a control channel scheduled by using the control information in the first format carries the partial content comprised in the first data packet.

33. A communication apparatus, wherein the communication apparatus comprises a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 8 by using a logic circuit or by executing code instructions, or the processor is configured to implement the method according to any one of claims 9 to 16 by using a logic circuit or by executing code instructions.

34. A communication system, comprising a first apparatus and a second apparatus, wherein the first apparatus is configured to implement the method according to any one of claims 1 to 8, and the second apparatus is configured to implement the method according to any one of claims 9 to 16.

35. A computer-readable storage medium, wherein the computer-readable storage medium stores a computer program, and when the computer program is run, the method according to any one of claims 1 to 8 is implemented, or the method according to any one of claims 9 to 16 is implemented.

36. A computer program product, wherein the computer program product comprises computer program code, and when the computer program code is run, the method according to any one of claims 1 to 8 is implemented, or the method according to any one of claims 9 to 16 is implemented.

Control command

Control end

Execution
end

Status information

FIG. 1

Data packet 1
(instruction 1)　　Data packet 2
(instruction 1)　　Data packet 3
(instruction 1)　　Data packet 4
(instruction 1)　　Data packet 5
(instruction 2)　　Data packet 6
(instruction 2)　　Data packet 7
(instruction 2)

(a)

Data packet 1
(instruction 1)　　Data packet 2
(instruction 2)　　Data packet 3
(instruction 1)　　Data packet 4
(instruction 2)　　Data packet 5
(instruction 1)　　Data packet 6
(instruction 2)　　Data packet 7
(instruction 1)

(b)

FIG. 2

Control        Network        Terminal        Execution
end            device         device          end

FIG. 3

FIG. 4

FIG. 5

FIG. 6

700

710                                      720

Processing          Transceiver
module              module

FIG. 7

800

801                                      802

Processor             Memory

Instructions          Instructions

803                                      804

Transceiver           Antenna

805                                      806

FIG. 8

# EP 4 683 256 A1

## INTERNATIONAL SEARCH REPORT

| | International application No. |
|---|---|
| | **PCT/CN2024/087835** |

| A. | CLASSIFICATION OF SUBJECT MATTER |
|---|---|

H04L 67/12(2022.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNKI, DWPI, CNTXT, ENTXTC, 3GPP: 工业控制, 工业现场, 数据包, 报文, 指令, 命令, 周期, 同样, 一样, 相同, 重复, 指示, 增量, ICS, IIoT, industrial, packet, command, period, same, repeat, indicate, increment

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115515159 A (HUAWEI TECHNOLOGIES CO., LTD.) 23 December 2022 (2022-12-23) description, paragraphs 0123-0172 | 1-36 |
| A | CN 109144773 A (HUAWEI TECHNOLOGIES CO., LTD.) 04 January 2019 (2019-01-04) entire document | 1-36 |
| A | US 2015316910 A1 (ROCKWELL AUTOMATION TECHNOLOGIES, INC.) 05 November 2015 (2015-11-05) entire document | 1-36 |
| A | US 2020159181 A1 (RADIFLOW LTD.) 21 May 2020 (2020-05-21) entire document | 1-36 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 July 2024** | **17 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

37

International application No.

**PCT/CN2024/087835**

| Patent document cited in search report | | | Publication date (day/month/year) | Patent family member(s) | | | Publication date (day/month/year) |
|---|---|---|---|---|---|---|---|
| CN | 115515159 | A | 23 December 2022 | WO | 2022267683 | A1 | 29 December 2022 |
| | | | | EP | 4336885 | A1 | 13 March 2024 |
| | | | | US | 2024121201 | A1 | 11 April 2024 |
| CN | 109144773 | A | 04 January 2019 | None | | | |
| US | 2015316910 | A1 | 05 November 2015 | EP | 2940543 | A2 | 04 November 2015 |
| US | 2020159181 | A1 | 21 May 2020 | None | | | |

Form PCT/ISA/210 (patent family annex) (July 2022)

**REFERENCES CITED IN THE DESCRIPTION**

**Patent documents cited in the description**

- CN 202310484524